# EUROPEAN PATENT APPLICATION

(11) **EP 3 243 407 A1**
(43) Date of publication of application: **15.11.2017**
(21) Application number: 17170512.2
(22) Date of filing: 10.05.2017
(51) Int. Cl.: A47B 9/08, A47C 3/28, F16B 7/14, A47B 9/02

(54) **A HEIGHT ADJUSTABLE STAND AND A TABLE COMPRISING THE SAME**

(30) Priority: 12.05.2016 NL 2016762
(71) Applicant: Smart Level Table B.V., 5803 AV Venray (NL)
(72) Inventor: Bus, Karolus Theodorus Wilhelmina Maria, 5821 BD Vierlingsbeek (NL)
(74) Representative: Nederlandsch Octrooibureau

(57) **Abstract**

The invention relates to a height adjustable stand (1) for supporting an object, such as a table leaf (100) or a camera. The invention also relates to a table (99) comprising said stand. The stand comprises at least a first leg (2), at least a first locking device (3) and at least a first central operating device (8) comprising at least a first elongated operating element (9) that is arranged to allow the first locking device to be transferred from a locked resting state to an unlocked state in which the height of the stand is adjustable.

## Description

The invention relates to a height adjustable stand for supporting an object, such as a table leaf or a camera. The invention also relates to a table comprising said stand. The height adjustable stand in the context of this invention is neither intended nor suitable for supporting at least one person or very heavy loads.

Adjusting the height of stands known in the art usually can be quite cumbersome as it involves a series of operations that a user needs to employ due to the construction of the locking devices used. As a result, setting up and adjusting the heights of multiple stands known in the art is quite time consuming and is preferably avoided as much as possible. Moreover, in the case of stands known in the art having multiple legs, leveling of these stands on an uneven surface is usually even more cumbersome as a length of the legs has to be adjusted individually requiring an iterative process to establish suitable lengths for each of the individual legs. Such a process can be inconvenient and time consuming as for example the stand needs to be supported by a user while the lengths of each of the individual legs are adjusted.

It is an object of the invention to provide a height adjustable stand for supporting an object that pre-empts or at least reduces at least one of the disadvantages mentioned above. It is also an object of the invention to provide a table that comprises the stand according to the invention.

Aspects of this invention are set out in the accompanying independent and dependent claims. Combinations of features from the dependent claims may be combined with features of the independent claims as appropriate and not merely as explicitly set out in the claims.

According to a first aspect of this invention, there is provided a height adjustable stand for supporting an object, the stand comprising at least a first leg and at least a first locking device that comprises at least a first locking unit, the at least first locking unit comprising at least a first housing that is provided with at least a first opening and at least a first guideway that is arranged to at least partially receive the at least first leg and guide the at least first leg, the stand further comprising at least a first central operating device that comprises at least a first elongated operating element that is movable in an axial direction of the at least first leg through the at least first opening of the at least first housing and is arranged to allow a user to transfer the at least first locking device from a locked resting state to an unlocked state, the at least first locking unit further comprising at least a first locking element, at least a first activation element and at least a first biasing element, wherein the at least first locking element is movably connected with the at least first housing and the at least first activation element and the at least first biasing element are arranged between the at least first housing and the at least first locking element to maintain in the resting state of the at least first locking device the at least first locking element and the at least first leg in a first locking contact to fix a height of the stand, wherein the at least first elongated operating element is arranged to prevent in the unlocked state of the at least first locking device the first locking contact between the at least first locking element and the at least first leg to adjust the height of the stand. This embodiment of the stand according to the invention allows a user to very conveniently adjust the height of the stand by manipulating the at least first operating element that is arranged to transfer the at least first locking device from the locking resting state to the unlocked state. The at least first locking device of the stand according to the invention is very lean and robust and enables adjustment of the height of the stand in a reliable way as often as required. When the at least first locking device is in the unlocked state the at least first leg and the at least first housing are movable with respect to each other in order to adjust the height of the stand as desired. Upon returning the at least first locking device to the locked resting state, the at least first leg and the at least first housing are not movable with respect to each other and the height of the stand is at least temporarily fixed. In this way, the stand according to the invention pre-empts or at least reduces the drawbacks mentioned above regarding stands known in the art.

In an embodiment of the stand according to the invention, the first locking unit further comprises at least a first releasing element that is connectable to or at least adjustably connected with the at least first elongated operating element, wherein in the unlocked state of the at least first locking device the at least first releasing element under the influence of the at least first elongated operating element is tenable in abutting contact with the at least first locking element to prevent the first locking contact. The height of the stand can now be adjusted by allowing the at least first leg to assume an appropriate first position relative to the at least first housing.

In an embodiment of the stand according to the invention, the stand comprises a second leg and a third leg, the at least first housing is provided with a second guideway that is arranged to at least partially receive the second leg and guide the second leg and a third guideway that is arranged to at least partially receive the third leg and guide the third leg, the at least first locking unit comprises a second locking element that is movably connected with the at least first housing and a third locking element that is movably connected with the at least first housing, wherein the first locking element is arranged opposite the first leg, the second locking element is arranged opposite the second leg and the third locking element is arranged opposite the third leg, wherein the at least first activation element is centrally arranged between the first locking element, the second locking element and the third locking element to simultaneously maintain in the resting state of the locking device under the influence of the at least first biasing element the first locking element and the first leg in the first locking contact, the second locking element and the second leg in a second locking contact and the third locking element and the third leg in a third locking contact, wherein the at least first elongated operating element is arranged to simultaneously prevent in the unlocked state of the at least first locking device the first locking contact, the second locking contact and the third locking contact. The stand according to this embodiment of the invention has three legs that in the unlocked state of the at least first locking device are movable simultaneously and independently with respect to each other and with respect to the at least first housing. In this way it is possible that each one of the three legs assumes a different position with respect to the at least first housing when adjusting the height of the stand. Hence the stand according to this embodiment allows a user to adjust the height of the stand and to position the stand stably even on an uneven supporting surface at the same time. This is very convenient and saves a lot of time especially when multiple stands have to be set up. When each one of the first leg, the second leg and the third leg has assumed respectively an appropriate first position, second position and third position relative to the at least first housing, the user can transfer the at least first locking device from the unlocked state to the locked resting state in which the first position of the first leg, the second position of the second leg and the third position of the third leg with respect to the at least first housing are simultaneously fixed.

In an embodiment of the stand according to the invention, in the unlocked state of the at least first locking device the at least first releasing element under the influence of the at least first elongated operating element is simultaneously tenable in abutting contact with the first locking element, the second locking element and the third locking element to simultaneously prevent the first locking contact, the second locking contact and the third locking contact. At least one of the height of the stand according to this embodiment and its positioning on a supporting surface can now be adjusted by allowing the first leg, the second leg and the third leg to assume respectively an appropriate first position, second position and third position relative to the at least first housing.

In an embodiment of the stand according to the invention, the stand comprises a fourth leg, the at least first housing is provided with a fourth guideway that is arranged to at least partially receive the fourth leg and guide the fourth leg, the at least first locking unit comprising a fourth locking element that is movably connected with the at least first housing, wherein the fourth locking element is arranged opposite the fourth leg, wherein the at least first activation element is centrally arranged between the first locking element, the second locking element, the third locking element and the fourth locking element to simultaneously maintain in the resting state of the at least first locking device under the influence of the at least first biasing element the first locking element and the first leg in the first locking contact, the second locking element and the second leg in the second locking contact, the third locking element and the third leg in the third locking contact and the fourth locking element and the fourth leg in a fourth locking contact, wherein the at least first elongated operating element is arranged to simultaneously prevent in the unlocked state of the at least first locking device the first locking contact, the second locking contact, the third locking contact and the fourth locking contact. The stand according to this embodiment of the invention has four legs that in the unlocked state of the at least first locking device are movable simultaneously and independently with respect to each other and with respect to the at least first housing. In this way it is possible that each one of the four legs assumes a different position with respect to the at least first housing when adjusting the height of the stand. Hence the stand according to this embodiment allows a user to adjust the height of the stand and to position the stand stably even on an uneven supporting surface at the same time. This is very convenient and saves a lot of time especially when multiple stands have to be set up. When each one of the first leg, the second leg, the third leg and the fourth leg has assumed respectively an appropriate first position, second position, third position and fourth position relative to the at least first housing, the user can transfer the at least first locking device from the unlocked state to the locked resting state in which the at least first activation element simultaneously maintains the first locking element and the first leg in the first locking contact, the second locking element and the second leg in the second locking contact, the third locking element and the third leg in the third locking contact and the fourth locking element and the fourth leg in the fourth locking contact in order to simultaneously fix the first position of the first leg, the second position of the second leg, the third position of the third leg and the fourth position of the fourth leg with respect to the at least first housing.

In an embodiment of the stand according to the invention, in the unlocked state of the at least first locking device the at least first releasing element under the influence of the at least first elongated operating element is simultaneously tenable in abutting contact with the first locking element, the second locking element, the third locking element and the fourth locking element to simultaneously prevent the first locking contact, the second locking contact, the third locking contact and the fourth locking contact. At least one of the height of the stand according to this embodiment and its positioning on a supporting surface can now be adjusted by allowing the first leg, the second leg, the third leg and the fourth leg to assume respectively an appropriate first position, second position, third position and fourth position relative to the at least first housing.

In an embodiment of the stand according to the invention, at least one of the first locking element, the second locking element, the third locking element and the fourth locking element is excentrically connected with the at least first housing.

In an embodiment of the stand according to the invention, at least one of the first locking element, the second locking element, the third locking element and the fourth locking element is provided with respectively a first recess, a second recess, a third recess and a fourth recess in which in the unlocked state of the at least first locking device the at least first releasing element is receivable.

In an embodiment of the stand according to the invention, at least one of the first locking element, the second locking element, the third locking element and the fourth locking element is provided with at least one of a first friction enhancing material and a first surface structure at least at a location of respectively the first locking contact, the second locking contact, the third locking contact and the fourth locking contact in the resting state of the at least first locking device. In this way at least one of the first locking contact, the second locking contact, the third locking contact and the fourth locking contact is an enhanced friction coupling.

In an embodiment of the stand according to the invention, at least one of the first leg, the second leg, the third leg and the fourth leg is provided with at least one of a second friction enhancing material and a second surface structure at least at the location of respectively the first locking contact, the second locking contact, the third locking contact and the fourth locking contact in the resting state of the at least first locking device. In this way at least one of the first locking contact, the second locking contact, the third locking contact and the fourth locking contact is an enhanced friction coupling. Moreover, according to an embodiment of the stand it is possible that at least one of the second friction enhancing material and the second surface structure is also provided outside the location of at least one of the first locking contact, the second locking contact, the third locking contact and the fourth locking contact. The person skilled in the art will appreciate that in such a case at least one of the second friction enhancing material and the second surface structure can be provided in the form of an elongated strip that extends in the axial direction of at least one of the first leg, the second leg, the third leg and the fourth leg.

In an embodiment of the stand according to the invention, at least one of the first friction enhancing material and the first surface structure is arranged to work together with at least one of the second friction enhancing material and the second surface structure. In this way at least one of the first locking contact, the second locking contact, the third locking contact and the fourth locking contact is at least one of an enhanced friction coupling and an enhanced form closed coupling.

In an embodiment of the stand according to the invention, at least one of the first friction enhancing material and the second friction enhancing material comprises a rubber, for example EPDM 70 shore.

In an embodiment of the stand according to the invention, at least one of the first surface structure and the second surface structure comprises a serrated portion. The serrated portion can comprise teethed protrusions. The person skilled in the art will appreciate that any surface structure suitable for providing an enhanced form closed coupling can be used.

In an embodiment of the stand according to the invention, the at least first activation element is conically shaped. By using a conically shaped at least first activation element it is possible to accommodate play that is caused by fabrication tolerances of at least one of the locking elements and the legs of the stand. The person skilled in the art will appreciate that the conically shaped at least first activation element in the locked resting state of the locking device under the influence of the at least first biasing element will always be forced into contact with any one of the locking elements of the first locking unit and hence will maintain locking contacts between any one of the locking elements of the first locking unit and the legs of the stand.

In an embodiment of the stand according to the invention, the at least first activation element is arranged around the at least first elongated operating element.

In an embodiment of the stand according to the invention, the at least first biasing element is a compression spring.

In an embodiment of the stand according to the invention, the at least first biasing element is arranged around the at least first elongated operating element.

In an embodiment of the stand according to the invention, the at least first releasing element is annularly shaped. The at least first releasing element can be a ring that is connectable to or at least adjustably connected with the at least first elongated operating element.

In an embodiment of the stand according to the invention, the at least first locking device comprises a second locking unit that is arranged opposite the at least first locking unit, the second locking unit comprises at least a second housing that is provided with at least a second opening and a third opening that are arranged opposite to each other and opposite the at least first opening of the at least first housing, the at least second housing is further provided with at least a fifth guideway that is arranged to at least partially receive the at least first leg and guide the at least first leg, the second locking unit further comprises at least a fifth locking element, at least a second activation element and at least a second biasing element, wherein the at least fifth locking element is movably connected with the at least second housing and the at least second activation element and the at least second biasing element are arranged between the at least second housing and the at least fifth locking element to maintain in the resting state of the at least first locking device the at least fifth locking element and the at least first leg in a fifth locking contact, wherein the at least first elongated operating element extends in the axial direction of the at least first leg through the at least second opening into the at least second housing, across the at least second housing, through the at least third opening out of the at least second housing, between the at least second housing and the at least first housing and through the at least first opening at least partially into the at least first housing, wherein the at least first elongated operating element is arranged to prevent in the unlocked state of the at least first locking device the fifth locking contact. The stand according to this embodiment comprises one leg, i.e. the first leg, and a locking device comprising two locking units, i.e. the first locking unit and the second locking unit. The stand according to this embodiment has an improved stability and robustness as the first leg is guided by the first guideway of the first housing of the first locking unit and the fifth guideway of the second housing of the second locking unit. Furthermore, the stand can be loaded more heavily as in the resting state of the locking device the first leg is in the first locking contact with the first locking element and in the fifth locking contact with the fifth locking element. In the unlocked state of the at least first locking device of the stand according to this embodiment, the at least first elongated operating element in fact simultaneously prevents the first locking contact and the fifth locking contact.

In an embodiment of the stand according to the invention, the second locking unit further comprises at least a second releasing element that is connectable to or at least adjustably connected with the at least first elongated operating element, wherein in the unlocked state of the at least first locking device the at least second releasing element under the influence of the at least first elongated operating element is tenable in abutting contact with the at least fifth locking element to prevent the fifth locking contact. In the unlocked state of the at least first locking device of the stand according to this embodiment, the at least first elongated operating element in fact simultaneously maintains the at least first releasing element of the first locking unit and the at least second releasing element of the second locking unit in abutting contact with respectively the first locking element and the fifth locking element in order to simultaneously prevent the first locking contact and the fifth locking contact.

In an embodiment of the stand according to the invention, the fifth locking element is excentrically connected with the at least second housing.

In an embodiment of the stand according to the invention, the at least fifth locking element is provided with a fifth recess in which in the unlocked state of the at least first locking device the at least second releasing element is receivable.

In an embodiment of the stand according to the invention, the at least fifth locking element is provided with at least one of a third friction enhancing material and a third surface structure at least at a location of the fifth locking contact in the resting state of the at least first locking device. In this way the fifth locking contact is an enhanced friction coupling.

In an embodiment of the stand according to the invention, the at least first leg is provided with at least one of a fourth friction enhancing material and a fourth surface structure at least at the location of the fifth locking contact in the resting state of the at least first locking device. In this way the fifth locking contact is an enhanced friction coupling. Moreover, according to an embodiment of the stand it is possible that at least one of the fourth friction enhancing material and the fourth surface structure is also provided outside the location of the fifth locking contact. The person skilled in the art will appreciate that in such a case at least one of the fourth friction enhancing material and the fourth surface structure can be provided in the form of an elongated strip that extends in the axial direction of the at least first leg.

In an embodiment of the stand according to the invention, at least one of the third friction enhancing material and the third surface structure is arranged to work together with at least one of the fourth friction enhancing material and the fourth surface structure. In this way the fifth locking contact is at least one of an enhanced friction coupling and an enhanced form closed coupling.

In an embodiment of the stand according to the invention, at least one of the third friction enhancing material and the fourth friction enhancing material comprises a rubber, for example EPDM 70 shore.

In an embodiment of the stand according to the invention, at least one of the third surface structure and the fourth surface structure comprises a serrated portion. The serrated portion can comprise teethed protrusions. The person skilled in the art will appreciate that any surface structure suitable for providing an enhanced form closed coupling can be used.

In an embodiment of the stand according to the invention, the at least second activation element is conically shaped. By using a conically shaped at least second activation element it is possible to accommodate play that is caused by fabrication tolerances of at least one of the locking elements and the legs of the stand. The person skilled in the art will appreciate that the conically shaped at least second activation element in the locked resting state of the at least first locking device under the influence of the at least second biasing element will always be forced into contact with any one of the locking elements of the second locking unit and hence will maintain locking contacts between any one of the locking elements of the second locking unit and the legs of the stand.

In an embodiment of the stand according to the invention, the at least second activation element is arranged around the at least first elongated operating element.

In an embodiment of the stand according to the invention, the at least second biasing element is a compression spring.

In an embodiment of the stand according to the invention, the at least second biasing element is arranged around the at least first elongated operating element.

In an embodiment of the stand according to the invention, the at least second releasing element is annularly shaped. The at least second releasing element can be a ring that is connectable to or at least adjustably connected with the first elongated operating element.

In an embodiment of the stand according to the invention, the at least first locking device comprises a third locking unit that is arranged opposite the at least first locking unit, the third locking unit comprises at least a third housing that is provided with at least a fourth opening and at least a fifth opening that are arranged opposite to each other and opposite the at least first opening of the at least first housing, the at least third housing is further provided with a sixth guideway that is arranged to at least partially receive the at least first leg and guide the at least first leg, a seventh guideway that is arranged to at least partially receive the second leg and guide the second leg and an eighth guideway that is arranged to at least partially receive the third leg and guide the third leg, the third locking unit further comprises a sixth locking element that is movably connected with the at least third housing, a seventh locking element that is movably connected with the at least third housing and an eighth locking element that is movably connected with the at least third housing, wherein the sixth locking element is arranged opposite the at least first leg, the seventh locking element is arranged opposite the second leg and the eighth locking element is arranged opposite the third leg, the third locking unit further comprises at least a third activation element and at least a third biasing element, wherein the at least third activation element is centrally arranged between the sixth locking element, the seventh locking element and the eighth locking element to simultaneously maintain in the resting state of the at least first locking device under the influence of the at least third biasing element the sixth locking element and the at least first leg in a sixth locking contact, the seventh locking element and the second leg in a seventh locking contact and the eighth locking element and the third leg in an eighth locking contact, wherein the at least first elongated operating element extends in the axial direction of the at least first leg, the second leg and the third leg through the at least fourth opening into the at least third housing, across the at least third housing, through the at least fifth opening out of the at least third housing, between the at least third housing and the at least first housing and through the at least first opening at least partially into the at least first housing, wherein the at least first elongated operating element is arranged to simultaneously prevent in the unlocked state of the at least first locking device the sixth locking contact, the seventh locking contact and the eighth locking contact. The stand according to this embodiment comprises three legs, i.e. the first leg, the second leg and the third leg, and a locking device comprising two locking units, i.e. the first locking unit and the third locking unit. The stand according to this embodiment has an improved stability and robustness as each one of the three legs is in fact guided by respective guideways of the at least first housing of the first locking unit and guideways of the at least third housing of the third locking unit. Furthermore, the stand can be loaded more heavily as in the resting state of the locking device each one of the three legs is in two locking contacts, i.e. the first leg is in the first locking contact with the first locking element of the first locking unit and in the sixth locking contact with the sixth locking element of the third locking unit, the second leg is in the second locking contact with the second locking element of the first locking unit and in the seventh locking contact with the seventh locking element of the third locking unit and the third leg is in the third locking contact with the third locking element of the first locking unit and in the eighth locking contact with the eighth locking element of the third locking unit. In the unlocked state of the at least first locking device of the stand according to this embodiment, the at least first elongated operating element in fact simultaneously prevents the first locking contact, the second locking contact, the third locking contact, the sixth locking contact, the seventh locking contact and the eighth locking contact. In addition, in the unlocked state of the at least first locking device of the stand according to this embodiment the three legs are movable simultaneously and independently with respect to each other and with respect to the at least first housing and the at least third housing. In this way it is possible that each one of the three legs assumes different positions with respect to the at least first housing and the at least third housing when adjusting the height of the stand. Hence the stand according to this embodiment allows a user to adjust the height of the stand and to position the stand stably even on an uneven supporting surface at the same time. When each one of the first leg, the second leg and the third leg has assumed appropriate positions relative to the at least first housing and the at least third housing, the user can transfer the locking device from the unlocked state to the locked resting state in which the assumed positions of each one of the three legs with respect to the at least first housing and the at least third housing are simultaneously fixed.

In an embodiment of the stand according to the invention, the third locking unit further comprises at least a third releasing element that is connectable to or at least adjustably connected with the at least first elongated operating element, wherein in the unlocked state of the at least first locking device the at least third releasing element under the influence of the at least first elongated operating element is simultaneously tenable in abutting contact with the sixth locking element, the seventh locking element and the eighth locking element to simultaneously prevent the sixth locking contact, the seventh locking contact and the eighth locking contact. In the unlocked state of the at least first locking device of the stand according to this embodiment, the at least first elongated operating element in fact simultaneously maintains the at least first releasing element in abutting contact with the first locking element, the second locking element and the third locking element of the first locking unit and the at least third releasing element in abutting contact with the sixth locking element, the seventh locking element and the eighth locking element of the third locking unit in order to simultaneously prevent the first locking contact, the second locking contact, the third locking contact, the sixth locking contact, the seventh locking contact and the eighth locking contact.

In an embodiment of the stand according to the invention, at least one of the sixth locking element, the seventh locking element and the eighth locking element is excentrically connected with the at least third housing.

In an embodiment of the stand according to the invention, at least one of the sixth locking element, the seventh locking element and the eighth locking element is provided with respectively a sixth recess, a seventh recess and an eighth recess in which in the unlocked state of the at least first locking device the at least third releasing element is receivable.

In an embodiment of the stand according to the invention, at least one of the sixth locking element, the seventh locking element and the eighth locking element is provided with at least one of a fifth friction enhancing material and a fifth surface structure at least at a location of respectively the sixth locking contact, the seventh locking contact and the eighth locking contact in the resting state of the at least first locking device. In this way at least one of the sixth locking contact, the seventh locking contact and the eighth locking contact is an enhanced friction coupling.

In an embodiment of the stand according to the invention, at least one of the first leg, the second leg and the third leg is provided with at least one of a sixth friction enhancing material and a sixth surface structure at least at the location of respectively the sixth locking contact, the seventh locking contact and the eighth locking contact in the resting state of the at least first locking device. In this way at least one of the sixth locking contact, the seventh locking contact and the eighth locking contact is an enhanced friction coupling. Moreover, according to an embodiment of the stand it is possible that at least one of the sixth friction enhancing material and the sixth surface structure is also provided outside the location of at least one of the sixth locking contact, the seventh locking contact and the eighth locking contact. The person skilled in the art will appreciate that in such a case at least one of the sixth friction enhancing material and the sixth surface structure can be provided in the form of an elongated strip that extends in the axial direction of at least one of the first leg, the second leg and the third leg.

In an embodiment of the stand according to the invention, at least one of the fifth friction enhancing material and the fifth surface structure is arranged to work together with at least one of the sixth friction enhancing material and the sixth surface structure. In this way at least one of the sixth locking contact, the seventh locking contact and the eighth locking contact is at least one of an enhanced friction coupling and an enhanced form closed coupling.

In an embodiment of the stand according to the invention, at least one of the fifth friction enhancing material and the sixth friction enhancing material comprises a rubber, for example EPDM 70 shore.

In an embodiment of the stand according to the invention, at least one of the fifth surface structure and the sixth surface structure comprises a serrated portion. The serrated portion can comprise teethed protrusions. The person skilled in the art will appreciate that any surface structure suitable for providing an enhanced form closed coupling can be used.

In an embodiment of the stand according to the invention, the at least third activation element is conically shaped. By using a conically shaped at least third activation element it is possible to accommodate play that is caused by fabrication tolerances of at least one of the locking elements and the legs of the stand. The person skilled in the art will appreciate that the conically shaped at least third activation element in the locked resting state of the locking device under the influence of the third biasing element will always be forced into contact with any one of the locking elements of the third locking unit and hence will maintain locking contacts between any one of the locking elements of the third locking unit and the legs of the stand.

In an embodiment of the stand according to the invention, the at least third activation element is arranged around the at least first elongated operating element.

In an embodiment of the stand according to the invention, the at least third biasing element is a compression spring.

In an embodiment of the stand according to the invention, the at least third biasing element is arranged around the at least first elongated operating element.

In an embodiment of the stand according to the invention, the at least third releasing element is annularly shaped. The at least third releasing element can be a ring that is connectable to or at least adjustably connected with the first elongated operating element.

In an embodiment of the stand according to the invention, the at least first locking device comprises a fourth locking unit that is arranged opposite the at least first locking unit, the fourth locking unit comprises at least a fourth housing that is provided with at least a sixth opening and at least a seventh opening that are arranged opposite to each other and opposite the at least first opening of the at least first housing, the at least fourth housing is further provided with a ninth guideway that is arranged to at least partially receive the at least first leg and guide the at least first leg, a tenth guideway that is arranged to at least partially receive the second leg and guide the second leg, an eleventh guideway that is arranged to at least partially receive the third leg and guide the third leg and a twelfth guideway that is arranged to at least partially receive the fourth leg and guide the fourth leg,
- the fourth locking unit further comprises a ninth locking element that is movably connected with the at least fourth housing, a tenth locking element that is movably connected with the at least fourth housing, an eleventh locking element that is movably connected with the at least fourth housing and a twelfth locking element that is movably connected with the at least fourth housing, wherein the ninth locking element is arranged opposite the at least first leg, the tenth locking element is arranged opposite the second leg, the eleventh locking element is arranged opposite the third leg and the twelfth locking element is arranged opposite the fourth leg,
- the fourth locking unit further comprises at least a fourth activation element and at least a fourth biasing element, wherein the at least fourth activation element is centrally arranged between the ninth locking element, the tenth locking element, the eleventh locking element and the twelfth locking element to simultaneously maintain in the resting state of the at least first locking device under the influence of the fourth biasing element the ninth locking element and the at least first leg in a ninth locking contact, the tenth locking element and the second leg in a tenth locking contact, the eleventh locking element and the third leg in an eleventh locking contact and the twelfth locking element and the fourth leg in a twelfth locking contact, wherein the at least first elongated operating element extends in the axial direction of the at least first leg, the second leg, the third leg and the fourth leg through the at least sixth opening into the at least fourth housing, across the at least fourth housing, through the at least seventh opening out of the at least fourth housing, between the at least fourth housing and the at least first housing and through the at least first opening at least partially into the at least first housing, wherein the at least first elongated operating element is arranged to simultaneously prevent in the unlocked state of the at least first locking device the ninth locking contact, the tenth locking contact, the eleventh locking contact and the twelfth locking contact. The stand according to this embodiment comprises four legs, i.e. the first leg, the second leg, the third leg and the fourth leg, and a locking device comprising two locking units, i.e. the first locking unit and the fourth locking unit. The stand according to this embodiment has an improved stability and robustness as each one of the four legs is in fact guided by respective guideways of the at least first housing of the first locking unit and guideways of the at least fourth housing of the fourth locking unit. Furthermore, the stand can be loaded more heavily as in the resting state of the locking device each one of the four legs is in two locking contacts, i.e. the first leg is in the first locking contact with the first locking element of the first locking unit and in the ninth locking contact with the ninth locking element of the fourth locking unit, the second leg is in the second locking contact with the second locking element of the first locking unit and in the tenth locking contact with the tenth locking element of the fourth locking unit, the third leg is in the third locking contact with the third locking element of the first locking unit and in the eleventh locking contact with the eleventh locking element of the fourth locking unit and the fourth leg is in the fourth locking contact with the fourth locking element of the first locking unit and in the twelfth locking contact with the twelfth locking element of the fourth locking unit. In the unlocked state of the locking device of the stand according to this embodiment, the at least first elongated operating element in fact simultaneously prevents the first locking contact, the second locking contact, the third locking contact, the fourth locking contact, the ninth locking contact, the tenth locking contact, the eleventh locking contact and the twelfth locking contact. In addition, in the unlocked state of the locking device of the stand according to this embodiment the four legs are movable simultaneously and independently with respect to each other and with respect to the at least first housing and the at least fourth housing. In this way it is possible that each one of the four legs assumes different positions with respect to the at least first housing and the at least fourth housing when adjusting the height of the stand. Hence the stand according to this embodiment allows a user to adjust the height of the stand and to position the stand stably even on an uneven supporting surface at the same time. When each one of the first leg, the second leg, the third leg and the fourth leg has assumed appropriate positions relative to the at least first housing and the at least fourth housing, the user can transfer the locking device from the unlocked state to the locked resting state in which the at least first activation element simultaneously maintains the first locking element and the first leg in the first locking contact, the second locking element and the second leg in the second locking contact, the third locking element and the third leg in the third locking contact and the fourth locking element and the fourth leg in the fourth locking contact and the at least fourth activation element simultaneously maintains the ninth locking element and the first leg in the ninth locking contact, the tenth locking element and the second leg in the tenth locking contact, the eleventh locking element and the third leg in the eleventh locking contact and the twelfth locking element and the fourth leg in the twelfth locking contact in order to simultaneously fix the assumed positions of each one of the four legs with respect to the at least first housing and the at least fourth housing.

In an embodiment of the stand according to the invention, the fourth locking unit further comprises at least a fourth releasing element that is connectable to or at least adjustably connected with the at least first elongated operating element, wherein in the unlocked state of the at least first locking device the at least fourth releasing element under the influence of the at least first elongated operating element is simultaneously tenable in abutting contact with the ninth locking element, the tenth locking element, the eleventh locking element and the twelfth locking element to simultaneously prevent the ninth locking contact, the tenth locking contact, the eleventh locking contact and the twelfth locking contact. In the unlocked state of the at least first locking device of the stand according to this embodiment, the at least first elongated operating element in fact simultaneously maintains the at least first releasing element in abutting contact with the first locking element, the second locking element, the third locking element and the fourth locking element of the first locking unit and the at least fourth releasing element in abutting contact with the ninth locking element, the tenth locking element, the eleventh locking element and the twelfth locking element of the fourth locking unit in order to simultaneously prevent the first locking contact, the second locking contact, the third locking contact, the fourth locking contact, the ninth locking contact, the tenth locking contact, the eleventh locking contact and the twelfth locking contact.

In an embodiment of the stand according to the invention, at least one of the ninth locking element, the tenth locking element, the eleventh locking element and the twelfth locking element is excentrically connected with the at least fourth housing.

In an embodiment of the stand according to the invention, at least one of the ninth locking element, the tenth locking element, the eleventh locking element and the twelfth locking element is provided with respectively a ninth recess, a tenth recess, an eleventh recess and a twelfth recess in which in the unlocked state of the at least first locking device the at least fourth releasing element is receivable.

In an embodiment of the stand according to the invention, at least one of the ninth locking element, the tenth locking element, the eleventh locking element and the twelfth locking element is provided with at least one of a seventh friction enhancing material and a seventh surface structure at least at a location of respectively the ninth locking contact, the tenth locking contact, the eleventh locking contact and the twelfth locking contact in the resting state of the at least first locking device. In this way at least one of the ninth locking contact, the tenth locking contact, the eleventh locking contact and the twelfth locking contact is an enhanced friction coupling.

In an embodiment of the stand according to the invention, at least one of the first leg, the second leg, the third leg and the fourth leg is provided with at least one of an eighth friction enhancing material and an eighth surface structure at least at the location of respectively the ninth locking contact, the tenth locking contact, the eleventh locking contact and the twelfth locking contact in the resting state of the at least first locking device. In this way at least one of the ninth locking contact, the tenth locking contact, the eleventh locking contact and the twelfth locking contact is an enhanced friction coupling. Moreover, according to an embodiment of the stand it is possible that at least one of the eighth friction enhancing material and the eighth surface structure is also provided outside the location of at least one of the ninth locking contact, the tenth locking contact, the eleventh locking contact and the twelfth locking contact. The person skilled in the art will appreciate that in such a case at least one of the eighth friction enhancing material and the eighth surface structure can be provided in the form of an elongated strip that extends in the axial direction of at least one of the first leg, the second leg, the third leg and the fourth leg.

In an embodiment of the stand according to the invention, at least one of the seventh friction enhancing material and the seventh surface structure is arranged to work together with at least one of the eighth friction enhancing material and the eighth surface structure. In this way at least one of the ninth locking contact, the tenth locking contact, the eleventh locking contact and the twelfth locking contact is at least one of an enhanced friction coupling and an enhanced form closed coupling.

In an embodiment of the stand according to the invention, at least one of the seventh friction enhancing material and the eighth friction enhancing material comprises a rubber, for example EPDM 70 shore.

In an embodiment of the stand according to the invention, at least one of the seventh surface structure and the eighth surface structure comprises a serrated portion. The serrated portion can comprise teethed protrusions. The person skilled in the art will appreciate that any surface structure suitable for providing an enhanced form closed coupling can be used.

In an embodiment of the stand according to the invention, the at least fourth activation element is conically shaped. By using a conically shaped at least fourth activation element it is possible to accommodate play that is caused by fabrication tolerances of at least one of the locking elements and the legs of the stand. The person skilled in the art will appreciate that the conically shaped at least fourth activation element in the locked resting state of the locking device under the influence of the at least fourth biasing element will always be forced into contact with any one of the locking elements of the fourth locking unit and hence will maintain locking contacts between any one of the locking elements of the fourth locking unit and the legs of the stand.

In an embodiment of the stand according to the invention, the at least fourth activation element is arranged around the first elongated operating element.

In an embodiment of the stand according to the invention, the at least fourth biasing element is a compression spring.

In an embodiment of the stand according to the invention, the at least fourth biasing element is arranged around the at least first elongated operating element.

In an embodiment of the stand according to the invention, the at least fourth releasing element is annularly shaped. The at least fourth releasing element can be a ring that is connectable to or at least adjustably connected with the at least first elongated operating element.

In an embodiment of the stand according to the invention, the at least first elongated operating element comprises at least one of a rod and a cable. According to the specific requirements of the at least first central operating device, the at least first elongated operating element can be implemented as a rod, a cable or a combination of a rod and a cable.

In an embodiment of the stand according to the invention, the at least first elongated operating element is provided with at least a first handle that is operable by a user to transfer the at least first locking device from a locked resting state to the unlocked state.

In an embodiment of the stand according to the invention, the at least first central operating device comprises a second operating element and at least a first transmission element that is arranged to connect the at least first operating element and the second operating element with each other and to transfer a first displacement of the second operating element to the at least first operating element in order to transfer the at least first locking device from the resting state to the unlocked state.

In an embodiment of the stand according to the invention, the second operating element is provided with a second handle that is operable by a user to transfer the at least first locking device from a locked resting state to the unlocked state.

In an embodiment of the stand according to the invention, the stand is provided with at least a fifth biasing element that is arranged to move at least the first leg to a first extended position at least with respect to the at least first housing when the at least first locking device is in the unlocked state. In this way, the first leg is automatically moved to the first extended position at least with respect to at least the first housing without the need for a user to directly manipulate the first leg.

In an embodiment of the stand according to the invention, the stand is provided with a sixth biasing element that is arranged to move the second leg to a second extended position at least with respect to the at least first housing when the at least first locking device is in the unlocked state, a seventh biasing element that is arranged to move the third leg to a third extended position at least with respect to the at least first housing when the at least first locking device is in the unlocked state and an eighth biasing element that is arranged to move the fourth leg to a fourth extended position at least with respect to the at least first housing when the at least first locking device is in the unlocked state. In this way, the second leg is automatically moved to the second extended position, the third leg is automatically moved to the third extended position and the fourth leg is automatically moved to the fourth extended position at least with respect to the at least first housing without the need for a user to directly manipulate any one of the second leg, the third leg and the fourth leg.

In an embodiment of the stand according to the invention, the first leg, the second leg, the third leg and the fourth leg are movable simultaneously and independently from each other to respectively the first extended position, the second extended position, the third extended position and the fourth extended position at least with respect to the at least first housing. The four legs of the stand according to this embodiment do not need to be manipulated by the user. Each one of the four legs can at the same time adopt its own extended position relative to the at least first housing that is required to stably position the stand on a supporting surface, even an uneven surface, at any desired height.

In an embodiment of the stand according to the invention, the at least fifth biasing element, the sixth biasing element, the seventh biasing element and the eighth biasing element are configured to carry the weight of the stand when the at least first locking device is in the unlocked state. In this way, a user that wants to change the height of the stand according to this embodiment does not need to support the weight of the stand as the weight is carried by the at least fifth biasing element, the sixth biasing element, the seventh biasing element and the eight biasing element. The user in fact experiences a kind of floating effect, i.e. the at least first housing of the stand kind of floats around the four legs when the at least first locking device is in the unlocked state. This increases user comfort while handling the stand during positioning the stand on a supporting surface and adjusting the height of the stand.

In an embodiment of the stand according to the invention, the stand further comprises at least a first elongated tubular element that is arranged coaxially with the at least first leg and the at least first elongated operating element to at least partially envelop the at least first leg and the at least first elongated operating element, wherein the at least first elongated tubular element is arranged in at least a first tenacious contact with at least the first housing. By at least partially enveloping the at least first leg and the at least first elongated operating element by the at least first elongated tubular element, the at least first leg and the at least first elongated operating element, which are moving parts of the stand, can at least partially be protected from the outside environment in which the stand is placed. As the at least first leg and the at least first elongated operating element can at least partially be protected from dirt and damage, at least the reliability of the stand can be improved. Furthermore, the at least first elongated tubular element allows to hide the at least first leg and the at least first elongated operating element, i.e. the internal construction of the stand, and to provide the stand with any desired appearance, e.g. colour, design pattern, etcetera.

According to a second aspect of this invention, there is provided a table comprising a table leaf and a height adjustable stand according to the invention, wherein the table leaf and the stand are at least releasably connected with each other. The person skilled in the art will appreciate that in an embodiment of the table, the table leaf can be at least releasably connected to the at least first elongated tubular element. However, the person skilled in the art will appreciate that the table leaf can be connected in any suitable way to the stand according to the invention. The table according to the invention allows a user to adjust the height of the table and to position the table stably even on an uneven supporting surface at the same time. This is very convenient and saves a lot of time especially when multiple tables have to be set up.

Further features and advantages of the invention will become apparent from the description of the invention by way of non-limiting and non-exclusive embodiments of the stand and the table according to the invention. These embodiments of the stand and table are not to be construed as limiting the scope of protection. The person skilled in the art will realize that other alternatives and equivalent embodiments of the stand and table according to the invention can be conceived and reduced to practice without departing from the scope of protection of the present invention. Embodiments of the stand and table according to the invention will be described with reference to the figures on the accompanying drawing sheets. The figures are schematic in nature and therefore not necessarily drawn to scale. Furthermore, like or same reference symbols denote like, same or corresponding parts. On the attached drawing sheets,
- figure 1 shows a perspective view of an exemplary embodiment of a height adjustable stand according to the invention comprising a first leg;
- figure 2 shows a combined perspective and cross-sectional view in an axial direction of the first leg of a part of the stand shown in figure 1. The stand according to the exemplary embodiment shown in figure 2 comprises a first locking device comprising a first locking unit and a second locking unit. The first locking unit and the second locking unit are arranged to lock and unlock the first leg. The at least first locking device shown in figure 2 is in a locked resting state;
- figure 3 shows a combined perspective and cross-sectional view of the exemplary embodiment of the part of the stand shown in figure 2 but now while the first locking device is in an unlocked state;
- figure 4 shows a perspective view of another exemplary embodiment of the stand according to the invention comprising a first leg, a second leg and a third leg;
- figure 5 shows a perspective view of yet another exemplary embodiment of the stand according to the invention comprising a first leg, a second leg, a third leg and a fourth leg;
- figure 6 shows a partly exploded perspective view of a part of the exemplary embodiment of the stand shown in figure 5. The first locking unit and the fourth locking unit of the first locking device are arranged to simultaneously lock and unlock the first leg, the second leg, the third leg and the fourth leg;
- figure 7 shows a side view of exemplary embodiments of on the one hand a first locking element that is provided with an exemplary embodiment of a first surface structure and on the other hand a part of a first leg that is provided with an exemplary embodiment of a second surface structure. The first surface structure and the second surface structure are arranged to work together to provide a form closed locking contact;
- figure 8 shows a combined perspective and cross-sectional view in an axial direction of the three legs of the stand shown in figure 4. According to the exemplary embodiment of the stand shown in figure 8, the at least first locking device comprises a first locking unit and a third locking unit that are arranged to simultaneously lock and unlock the first leg, the second leg and the third leg. The at least first locking device shown in figure 8 is in the locked resting state;
- figure 9 shows a combined perspective and cross-sectional view of the exemplary embodiment of the part of the stand shown in figure 8 but now while the first locking device is in an unlocked state;
- figure 10 shows a perspective view of an exemplary embodiment of a table according to the invention comprising a table leaf that is connected with a height adjustable stand according to the invention having a first leg;
- figure 11 shows a perspective view of another exemplary embodiment of the table according to the invention comprising a table leaf that is connected with a height adjustable stand according to the invention having a first leg, a second leg and a third leg;
- figure 12 shows a perspective view of yet another exemplary embodiment of the table according to the invention comprising a table leaf and a height adjustable stand according to the invention having a first leg, a second leg, a third leg and a fourth leg;
- figure 13 shows a side view of a part of the table leaf of any one of the tables shown in figures 10-12 and an exemplary embodiment of the at least first central operating device of the stand according to the invention;
- figure 14 shows a side view of a part of the table leaf of any one of the tables shown in figures 10-12 and another exemplary embodiment of the at least first central operating device of the stand according to the invention.

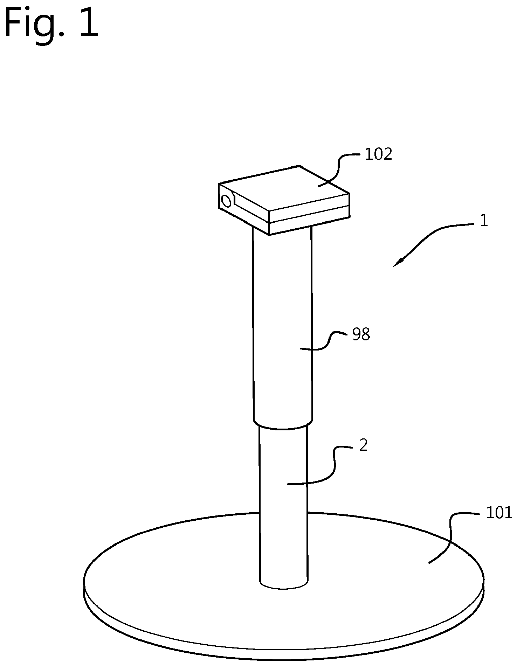

Figure 1 shows a perspective view of an exemplary embodiment of a height adjustable stand 1 according to the invention comprising a first leg 2. At a first end of the leg 2 a footplate 101 is provided that is arranged, in use of the stand 1, to position the stand 1 stably on a supporting surface. At an opposing second end of the leg 2 a coupling arrangement 102 is provided that is connectable with an object to be supported, e.g. a table leaf or a camera.

The stand 1 shown in figure 1 further comprises a first elongated tubular element 98 that is arranged coaxially with the first leg to at least partially envelop the first leg 2. In this way, the first leg 2 can at least partially be protected from the outside environment in which the stand 1 is placed. As a result, the reliability of the stand 1 can be improved. Furthermore, the first elongated tubular element 98 allows to provide the stand 1 with any desired appearance, e.g. colour, design pattern, etcetera. In the following figures exemplary embodiments of the construction of the stand 1 will be discussed.

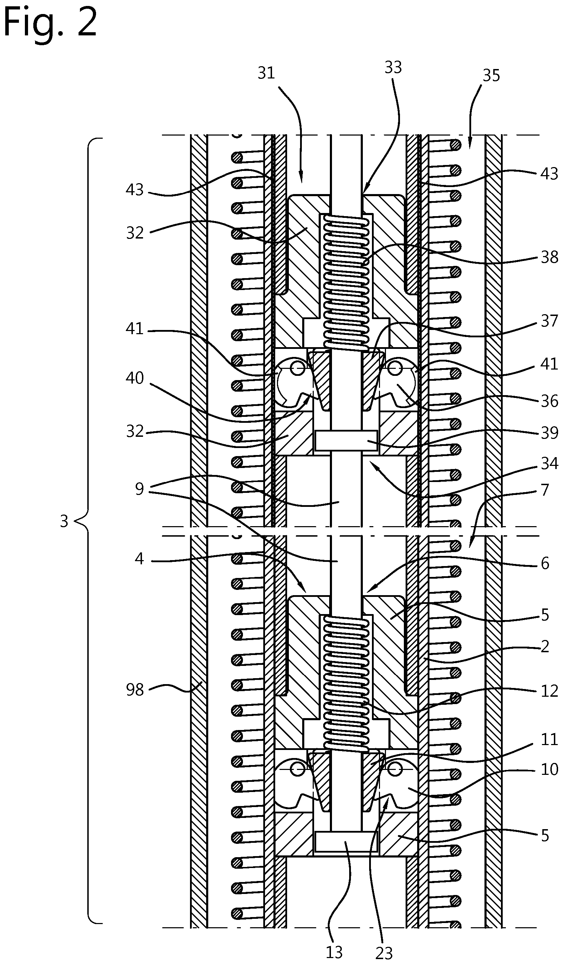

Figure 2 shows a combined perspective and cross-sectional view in an axial direction of the first leg 2 of a part of the stand 1 shown in figure 1. The stand 1 according to the exemplary embodiment shown in figure 2 comprises a first locking device 3 comprising a first locking unit 4 and a second locking unit 31. The person skilled in the art will appreciate that a first locking unit 4 would be sufficient to achieve the advantages effects of the stand according to the present invention. The first locking unit 4 comprises at least a first housing 5 that is provided with at least a first opening 6 and at least a first guideway 7 that is arranged to at least partially receive the at least first leg 2 and guide the at least first leg. The stand 1 further comprises at least a first central operating device 8 that comprises at least a first elongated operating element 9 that is movable in an axial direction of the at least first leg 2 through the at least first opening 6 of the at least first housing 5 and is arranged to allow a user to transfer the at least first locking device 3 from a locked resting state to an unlocked state. The at least first locking unit 4 further comprises at least a first locking element 10, at least a first activation element 11 and at least a first biasing element 12. The at least first locking element 10 is movably connected with the at least first housing 5 and the at least first activation element 11 and the at least first biasing element 12 are arranged between the at least first housing 5 and the at least first locking element 10 to maintain, in the resting state of the at least first locking device 3, the at least first locking element 10 and the at least first leg 2 in a first locking contact to fix a height of the stand 1. The at least first elongated operating element 9 is arranged to prevent, in the unlocked state of the at least first locking device 3, the first locking contact between the at least first locking element 10 and the at least first leg 2 to adjust the height of the stand 1. This embodiment of the stand 1 allows a user to very conveniently adjust the height of the stand 1 by manipulating the at least first operating element 9 that is arranged to transfer the at least first locking device 3 from the locking resting state to the unlocked state. The at least first locking device 3 of the stand 1 according to the invention is very lean and robust and enables adjustment of the height of the stand 1 in a reliable way as often as required. When the at least first locking device 3 is in the unlocked state the at least first leg 2 and the at least first housing 5 are movable with respect to each other in order to adjust the height of the stand 1 as desired. Upon returning the at least first locking device 3 to the locked resting state, the at least first leg 2 and the at least first housing 5 are not movable with respect to each other and the height of the stand 1 is at least temporarily fixed. In this way, the stand 1 according to the invention pre-empts or at least reduces the drawbacks mentioned above regarding stands known in the art.

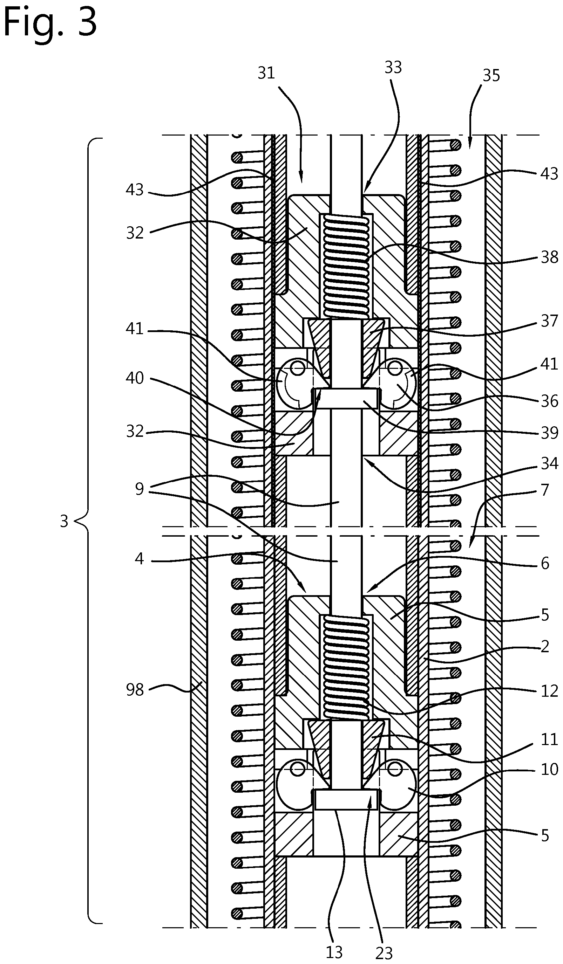

The first locking unit 4 further comprises at least a first releasing element 13 that, in the embodiment of the stand 1 shown in figure 2, is connected with the at least first elongated operating element 9. In the unlocked state of the at least first locking device 3 the at least first releasing element 13 under the influence of the at least first elongated operating element 9 is tenable in abutting contact with the at least first locking element 10 to prevent the first locking contact. The height of the stand 1 can now be adjusted by allowing the at least first leg 2 to assume an appropriate first position relative to the at least first housing 5. Further details about the unlocked state of the at least first locking device 3 shown in figure 2 will be provided in relation to figure 3.

In the embodiment shown in figure 2, the first locking element 10 is excentrically connected with the first housing 5. This way of connecting the first locking element 10 and the first housing 5 allows to use a construction with as little components as possible which increases the reliability of the at least first locking device 3.

According to the exemplary embodiment shown in figure 2, the at least first locking device 3 has a second locking unit 31 that comprises a second housing 32 which is provided with a second opening 33 and a third opening 34 that are arranged opposite to each other and opposite the first opening 6 of the first housing 5 of the first locking unit 4. The second housing 32 is further provided with a fifth guideway 35 that is arranged to at least partially receive the first leg 2 and guide the first leg. The second locking unit 31 further comprises a fifth locking element 36, a second activation element 37 and a second biasing element 38. The fifth locking element 36 is excentrically connected with the second housing 32 and the second activation element 37 and the second biasing element 38 are arranged between the second housing 32 and the fifth locking element 36 to maintain, in the resting state of the first locking device 3, the fifth locking element 36 and the first leg 2 in a fifth locking contact.

The first elongated operating element 9 of the first locking device 3 extends in the axial direction of the first leg 2 through the second opening 33 into the second housing 32, across the second housing 32, through the third opening 34 out of the second housing 32, between the second housing 32 and the first housing 5 and through the first opening 6 into the first housing 5. The second locking unit 31 further comprises a second releasing element 39 that, in the embodiment of the stand 1 shown in figure 2, is connected with the at least first elongated operating element 9. In the exemplary embodiment shown in figure 2, the first releasing element 13 and the second releasing element 29 are rings.

The person skilled in the art will appreciate that the stand 1 as shown in figure 2 has an improved stability and robustness compared to a stand having one locking unit because the first leg 2 is guided by both the first guideway 7 of the first housing 5 of the first locking unit 4 and by the fifth guideway 35 of the second housing 32 of the second locking unit 31. Furthermore, the stand 1 shown in figure 2 can be loaded more heavily than a stand having only one locking unit as in the resting state of the at least first locking device 3, the first leg 2 is in the first locking contact with the first locking element 10 and in the fifth locking contact with the fifth locking element 36.

Figure 2 furthermore shows that the first locking element 10 is provided with a first recess 23 in which, in the unlocked state of the first locking device 3, the first releasing element 13 is receivable and that the fifth locking element 36 is provided with a fifth recess 40 in which, in the unlocked state of the first locking device 3, the second releasing element 39 is receivable.

In the exemplary embodiment of figure 2, the fifth locking element 36 is provided with a third friction enhancing material 41 at least at the location of fifth locking contact in the resting state of the first locking device 3. In this way, fifth locking contact is an enhanced friction coupling. Moreover, the first leg 2 is provided with a fourth friction enhancing material 43 at least at the location of the fifth locking contact in the resting state of the first locking device 3. In this way, the fifth locking contact can be even further enhanced, especially when the third friction enhancing material 41 and the fourth friction enhancing material 43 are arranged to work together. The skilled person will appreciate that at least one of the first friction enhancing material and the second friction enhancing material comprises a rubber, for example EPDM 70 shore.

As shown in figure 2, the fourth friction enhancing material 43 is provided outside the location of the fifth locking contact. The person skilled in the art will appreciate that the fourth friction enhancing material 43 is provided in the form of an elongated strip that extends in the axial direction of the first leg 2.

Figure 2 furthermore shows that the first activation element 11 and the second activation element 37 are arranged around the first elongated operating element 9. The same holds for the first biasing element 12 and the second biasing element 38, which in the embodiment shown in figure 2 are compression springs.

Figure 2 also shows that the first activation element 11 and the second activation element 37 are conically shaped. By using a conically shaped activation element it is possible to accommodate play that is caused by fabrication tolerances of at least one of the locking elements and the leg of the stand. The person skilled in the art will appreciate that the conically shaped first activation element 11 in the locked resting state of the locking device 3 under the influence of the first biasing element 12 will always be forced into contact with the first locking element 10 of the first locking unit 4 and hence will maintain the first locking contact between the first locking element 10 of the first locking unit 4 and the first leg 2 of the stand 1. Analogously, the conically shaped second activation element 37 in the locked resting state of the locking device 3 under the influence of the second biasing element 38 will always be forced into contact with the fifth locking element 36 of the second locking unit 31 and hence will maintain the fifth locking contact between the fifth locking element 36 of the second locking unit 31 and the first leg 2 of the stand 1.

Figure 3 shows a combined perspective and cross-sectional view of the exemplary embodiment of the part of the stand 1 shown in figure 2 but now while the first locking device 3 is in an unlocked state. The at least first locking device 3 can be transferred from the locked resting state to the unlocked state by moving the at least first elongated operating element 9 such that the at least first releasing element 13 is simultaneously held in abutting contact with the at least first locking element 10 and the fifth locking element 36 to simultaneously prevent the first locking contact and the fifth locking contact. The height of the stand 1 can now conveniently be adjusted by allowing the at least first leg 2 to assume an appropriate first position relative to both the at least first housing 5 and the at least second housing 31.

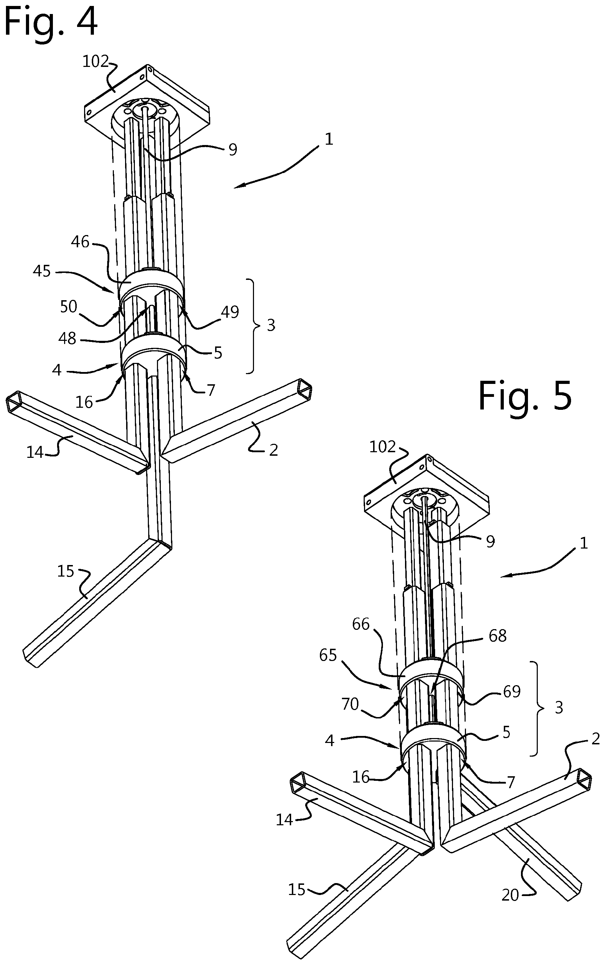

Figure 4 shows a perspective view of another exemplary embodiment of the stand 1 according to the invention comprising a first leg 2, a second leg 14 and a third leg 15. The first locking device 3 comprises a first locking unit 4 and a third locking unit 45. The first locking unit 4 is provided with a first guideway 7 for at least partially receiving the first leg 2 and guiding the first leg, a second guideway 16 for at least partially receiving the second leg 14 and guiding the second leg and a third guideway 17 for at least partially receiving the third leg 15 and guiding the third leg. The third locking unit 45 is provided with a sixth guideway 49 for at least partially receiving the first leg 2 and guiding the first leg, a seventh guideway 50 for at least partially receiving the second leg 14 and guiding the second leg and a not visible eighth guideway for at least partially receiving the third leg 15 and guiding the third leg.

Figure 5 shows a perspective view of yet another exemplary embodiment of the stand 1 according to the invention comprising a first leg 2, a second leg 14, a third leg 15 and a fourth leg 20. The first locking device 3 comprises a first locking unit 4 and a fourth locking unit 65. The first locking unit 4 is provided with a first guideway 7 for at least partially receiving the first leg 2 and guiding the first leg, a second guideway 16 for at least partially receiving the second leg 14 and guiding the second leg, a not visible third guideway for at least partially receiving the third leg 15 and guiding the third leg and an also not visible fourth guideway for at least partially receiving the fourth leg 20 and guiding the fourth leg. The fourth locking unit 65 is provided with a ninth guideway 69 for at least partially receiving the first leg 2 and guiding the first leg, a tenth guideway 70 for at least partially receiving the second leg 14 and guiding the second leg, a not visible eleventh guideway for at least partially receiving the third leg 15 and guiding the third leg and an also not visible twelfth guideway for at least partially receiving the fourth leg 20 and guiding the fourth leg.

The person skilled in the art will appreciate that for the stands 1 according to the embodiments shown in figures 4 and 5 the height can conveniently be adjusted as explained above and that the respectively three and four legs of these stands can simultaneously and individually be moved such that these stands can be positioned stably even on uneven supporting surfaces.

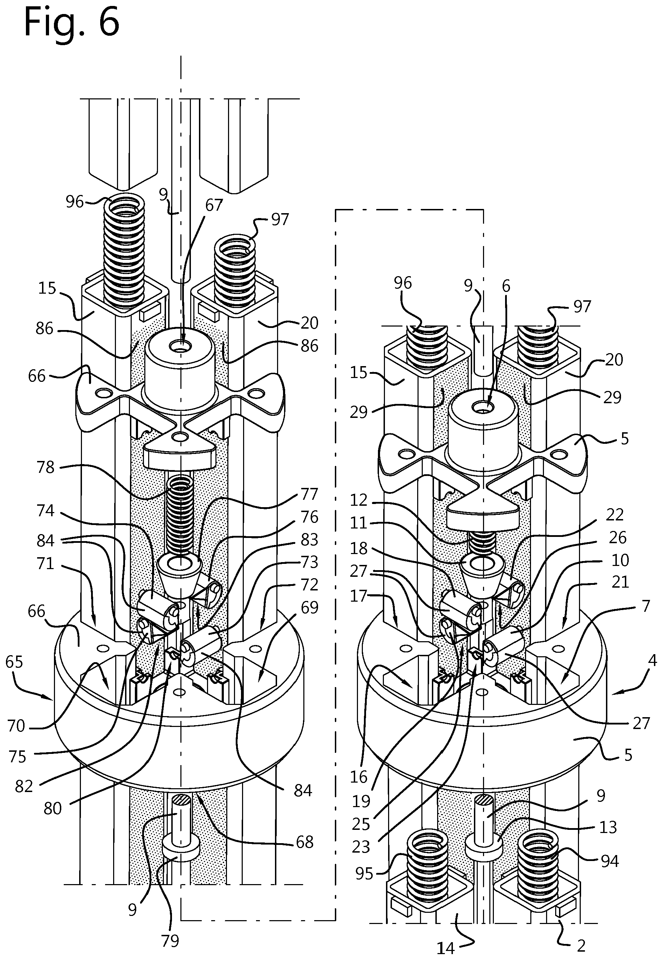

Figure 6 shows a partly exploded perspective view of a part of the exemplary embodiment of the stand 1 shown in figure 5. According to the exemplary embodiment of the stand 1 shown in figure 6, the first locking unit 4 and the fourth locking unit 65 of the first locking device 3 are arranged to simultaneously lock and unlock the first leg 2, the second leg 14, the third leg 15 and the fourth leg 20.

In addition to the features described in relation to figure 2, the first housing 5 of the first locking unit 4 is provided with a second guideway 16 that is arranged to at least partially receive the second leg 14 and guide the second leg, a third guideway 17 that is arranged to at least partially receive the third leg 15 and guide the third leg and a fourth guideway 21 that is arranged to at least partially receive the fourth leg 20 and guide the fourth leg. The first locking unit 4 comprises a second locking element 18, a third locking element 19 and a fourth locking element 22 that in use are excentrically connected with the first housing 5. The first locking element 10 in use is arranged opposite the first leg 2, the second locking element 18 in use is arranged opposite the second leg 14, the third locking element 19 in use is arranged opposite the third leg 15 and the fourth locking element 22 in use is arranged opposite the fourth leg 20. The first activation element 11 of the first locking unit 4 in use is centrally arranged between the first locking element 10, the second locking element 18, the third locking element 19 and the fourth locking element 22 to simultaneously maintain in the resting state of the first locking device 3 under the influence of the first biasing element 12, the first locking element 10 and the first leg 2 in the first locking contact, the second locking element 18 and the second leg 14 in a second locking contact, the third locking element 19 and the third leg 15 in a third locking contact and the fourth locking element 22 and the fourth leg 20 in a fourth locking contact.

Figure 6 shows that the third locking element 19 and the fourth locking element 22 are provided with respectively a third recess 25 and a fourth recess 26 in which the first releasing element 13 of the first locking unit 4 is received while the first locking device 3 is in the unlocked state. Although only visible in figure 6 for the third locking element 19 and the fourth locking element 22, also the first locking element 10 and the second locking element 18 are provided with respectively a first recess 23 and a second recess 24 in which the first releasing element 13 of the first locking unit 4 is received while the first locking device 3 is in the unlocked state.

From figure 6 the person skilled in the art will appreciate that the fourth locking unit 65 of the first locking device 3 in use is arranged opposite the first locking unit 4. The fourth locking unit 65 comprises a fourth housing 66 that is provided with a sixth opening 67 and a seventh opening 68 that are arranged opposite to each other and opposite the first opening 6 of the first housing 5 of the first locking unit 4. The fourth housing 66 is further provided with a ninth guideway 69 that is arranged to at least partially receive the first leg 2 and guide the first leg, a tenth guideway 70 that is arranged to at least partially receive the second leg 14 and guide the second leg, an eleventh guideway 71 that is arranged to at least partially receive the third leg 15 and guide the third leg and a twelfth guideway 72 that is arranged to at least partially receive the fourth leg 20 and guide the fourth leg.

The fourth locking unit 65 further comprises a ninth locking element 73, a tenth locking element 74, an eleventh locking element 75 and a twelfth locking element 76 that are excentrically connected with the fourth housing 66. The ninth locking element 73 is arranged opposite the first leg 2, the tenth locking element 74 is arranged opposite the second leg 14, the eleventh locking element 75 is arranged opposite the third leg 15 and the twelfth locking element 76 is arranged opposite the fourth leg 20.

The fourth locking unit 65 further comprises a fourth activation element 77 and a fourth biasing element 78. The fourth activation element 77 is centrally arranged between the ninth locking element 73, the tenth locking element 74, the eleventh locking element 75 and the twelfth locking element 76 to simultaneously maintain in the resting state of the first locking device 3 under the influence of the fourth biasing element 78 the ninth locking element 73 and the first leg 2 in a ninth locking contact, the tenth locking element 74 and the second leg 14 in a tenth locking contact, the eleventh locking element 75 and the third leg 15 in an eleventh locking contact and the twelfth locking element 76 and the fourth leg 20 in a twelfth locking contact. The first elongated operating element 9 in use extends in the axial direction of the first leg 2, the second leg 14, the third leg 15 and the fourth leg 20 through the sixth opening 67 into the fourth housing 66, across the fourth housing 66, through the seventh opening 68 out of the fourth housing 66, between the fourth housing 66 and the first housing 5 and through the first opening 6 at least partially into the first housing 5 of the first locking unit 4. The stand 1 according to the exemplary embodiment shown in figure 6 has an improved stability and robustness as each one of the four legs is in fact guided by respective guideways of the first housing 5 of the first locking unit 4 and guideways of the fourth housing 66 of the fourth locking unit 65. Furthermore, the stand can be loaded more heavily as in the resting state of the locking device 3 each one of the four legs is in two locking contacts, i.e. the first leg 2 is in the first locking contact with the first locking element 10 of the first locking unit 4 and in the ninth locking contact with the ninth locking element 73 of the fourth locking unit 65, the second leg 14 is in the second locking contact with the second locking element 18 of the first locking unit 4 and in the tenth locking contact with the tenth locking element 74 of the fourth locking unit 65, the third leg 15 is in the third locking contact with the third locking element 19 of the first locking unit 4 and in the eleventh locking contact with the eleventh locking element 75 of the fourth locking unit 65 and the fourth leg 20 is in the fourth locking contact with the fourth locking element 22 of the first locking unit 4 and in the twelfth locking contact with the twelfth locking element 76 of the fourth locking unit 65.

The person skilled in the art will appreciate that the four legs of the stand 1 shown in figures 5 and 6 in the unlocked state of the first locking device 3 are movable simultaneously and independently with respect to each other and with respect to the first housing 5 and the fourth housing 65. In this way, it is possible that each one of the four legs assumes a different position with respect to the first housing 5 and the fourth housing 65 when adjusting the height of the stand 1. Hence the stand 1 according to this embodiment allows a user to adjust the height of the stand 1 and to position the stand 1 stably even on an uneven supporting surface at the same time. This is very convenient and saves a lot of time especially when multiple stands have to be set up. When each one of the first leg 2, the second leg 14, the third leg 15 and the fourth leg 20 has assumed respectively an appropriate first position, second position, third position and fourth position relative to the first housing 5 and the fourth housing 65, the user can transfer the first locking device 3 from the unlocked state to the locked resting state in which the first position of the first leg 2, the second position of the second leg 14, the third position of the third leg 15 and the fourth position of the fourth leg 20 with respect to the first housing 5 and to the fourth housing 65 are simultaneously fixed.

Figure 6 shows that the eleventh locking element 75 and the twelfth locking element 76 are provided with respectively an eleventh recess 82 and a twelfth recess 83 in which the fourth releasing element 79 of the fourth locking unit 65 is received while the first locking device 3 is in the unlocked state. Although only visible in figure 6 for the eleventh locking element 75 and the twelfth locking element 76, also the ninth locking element 73 and the tenth locking element 74 are provided with respectively a ninth recess and a tenth recess in which the fourth releasing element 79 of the fourth locking unit 65 is received while the first locking device 3 is in the unlocked state. In the unlocked state of the first locking device 3, the ninth, the tenth, the eleventh and the twelfth locking contacts are simultaneously being prevented in order to allow adjustment of the height of the stand by changing the positions of the four legs and the first 5 and fourth 65 housings with respect to each other. In addition, as it is possible to individually change the position of each one of the four legs with respect to the first 5 and the fourth 65 housings, the stand 1 can be stably positioned even on uneven supporting surfaces.

In the exemplary embodiment of figure 6, the first 10, the second 18, the third 19 and the fourth 22 locking elements are provided with a first friction enhancing material 27. Analogously, the ninth 73, the tenth 74, the eleventh 75 and the twelfth 76 locking elements are provided with a seventh friction enhancing material 84. In this way, the first, the second, the third, the fourth, the ninth, the tenth, the eleventh and the twelfth locking contacts are enhanced friction couplings. Moreover, as shown in figure 6, the third leg 15 and the fourth leg 20 are provided with elongated axially extending strips of respectively a second friction enhancing material 29 and an eighth friction enhancing material 86. Although not visible in figure 6, the first leg 2 and the second leg 14 are in this exemplary embodiment also provided with elongated axially extending strips of respectively the second friction enhancing material 29 and the eighth friction enhancing material 86. In this way, the first, the second, the third, the fourth, the ninth, the tenth, the eleventh and the twelfth locking contacts can be even further enhanced. The person skilled in the art will appreciate that to this end it is beneficial if the first friction enhancing material 27 and the second friction enhancing material 29 are arranged to work together. The same holds for the seventh friction enhancing material 84 and the eighth friction enhancing material 86. The skilled person will also appreciate that the first 27, the second 29, the seventh 84 and the eighth 86 friction enhancing materials can be the same, e.g. comprising a rubber like EPDM 70 shore.

Figure 6 furthermore shows that in use the first activation element 11 and the fourth activation element 77 are arranged around the first elongated operating element 9. The same holds in use for the first biasing element 12 and the fourth biasing element 78, which in the embodiment shown in figure 6 are compression springs.

Figure 6 also shows that the first activation element 11 and the fourth activation element 77 are conically shaped. By using a conically shaped activation element it is possible to accommodate play that is caused by fabrication tolerances of at least one of the locking elements and the legs of the stand. The person skilled in the art will appreciate that the conically shaped first activation element 11 in the locked resting state of the locking device 3 under the influence of the first biasing element 12 will always be forced into contact with the first locking element 10, the second locking element 18, the third locking element 19 and the fourth locking element 22 of the first locking unit 4 and hence will maintain the first, the second, the third and the fourth locking contacts between the first, the second, the third and the fourth locking elements of the first locking unit 4 and respectively the first leg 2, the second leg 14, the third leg 15 and the fourth leg 20 of the stand 1. Analogously, the conically shaped fourth activation element 77 in the locked resting state of the locking device 3 under the influence of the fourth biasing element 78 will always be forced into contact with the ninth locking element 73, the tenth locking element 74, the eleventh locking element 75 and the twelfth locking element 76 of the fourth locking unit 65 and hence will maintain the ninth, the tenth, the eleventh and the twelfth locking contacts between the ninth, the tenth, the eleventh and the twelfth locking elements of the fourth locking unit 65 and respectively the first leg 2, the second leg 14, the third leg 15 and the fourth leg 20 of the stand 1.

Figure 6 furthermore shows that this exemplary embodiment of the stand 1 is provided with a fifth biasing element 94, a sixth biasing element 95, a seventh biasing element 96 and an eighth biasing element 97, each one of which, when the at least first locking device 3 in use is in the unlocked state, are arranged to move respectively the first leg 2 to a first extended position, the second leg 14 to a second extended position, the third leg 15 to a third extended position and the fourth leg 20 to a fourth extended position with respect to the first 5 and fourth 65 housings. In this way, each one of the first 2, the second 14, the third 15 and the fourth 20 legs is automatically moved to the respective first, second, third and fourth extended positions with respect to the first 5 and fourth 65 housings without the need for a user to directly manipulate any one of the first leg 2, the second leg 14, the third leg 15 and the fourth leg 20. In this way, the first leg 2, the second leg 14, the third leg 15 and the fourth leg 20 are movable simultaneously and independently from each other to respectively the first extended position, the second extended position, the third extended position and the fourth extended position with respect to the first 5 and fourth 65 housings. As each one of the four legs can at the same time adopt its own extended position relative to the first 5 and fourth 65 housings, the stand can conveniently be stably positioned even on uneven supporting surfaces at any desired height.

Moreover, the fifth biasing element 94, the sixth biasing element 95, the seventh biasing element 96 and the eighth biasing element 97 can be configured to carry the weight of the stand 1 when the first locking device 3 is in the unlocked state. In this way, a user that wants to change the height of the stand according to this exemplary embodiment does not need to support the weight of the stand as the weight is carried by the fifth 94, the sixth 95, the seventh 96 and the eight 97 biasing elements. The user in fact experiences a kind of floating effect, i.e. the first 5 and fourth 65 housings kind of float around the four legs when the first locking device 3 in use is in the unlocked state. This increases user comfort while handling the stand during positioning the stand on a supporting surface and adjusting the height of the stand.

In the exemplary embodiment shown in figure 6 the fifth 94, the sixth 95, the seventh 96 and the eighth 97 biasing elements are arranged inside the respective first leg 2, second leg 14, third leg 15 and fourth leg 20. Furthermore, the fifth 94, the sixth 95, the seventh 96 and the eighth 97 biasing elements are arranged between respective end blocks of which only a third end block 103 and a fourth end block 104 are visible in figure 6 and respective end parts of the first 2, the second 14, the third 15 and the fourth 20 legs. Although the end parts are not visible in figure 6 the person skilled in the art will know how the fifth 94, the sixth 95, the seventh 96 and the eighth 97 biasing elements need to be implemented to realize the advantageous effect according to the invention.

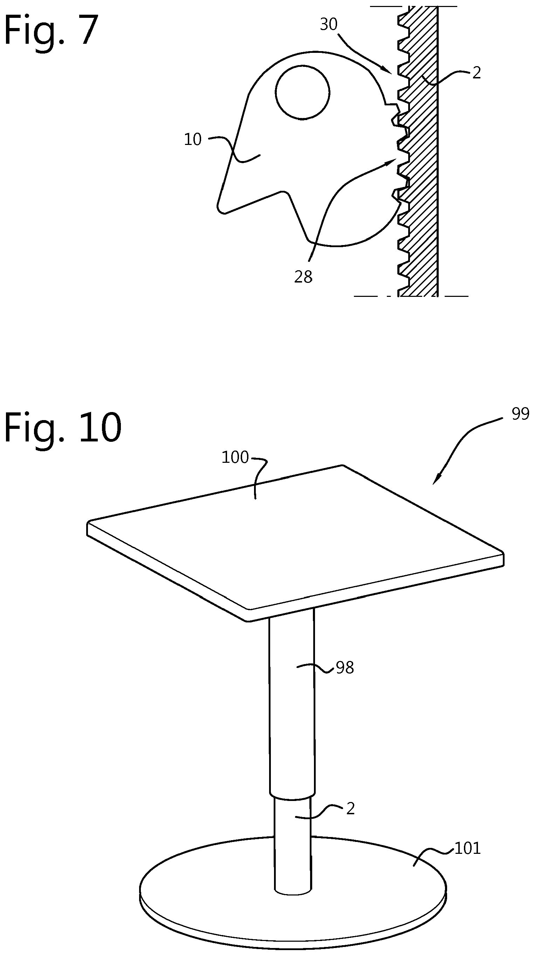

Figure 7 shows a side view of exemplary embodiments of on the one hand a first locking element 10 that is provided with an exemplary embodiment of a first surface structure 28 and on the other hand a part of a first leg 2 that is provided with an exemplary embodiment of a second surface structure 30. The first surface structure 28 and the second surface structure 30 are arranged to work together to provide a form closed locking contact. In the exemplary embodiment shown in figure 7, the first surface structure 10 and the second surface structure 30 comprises serrated portions having teethed protrusions. The person skilled in the art will appreciate that any surface structure suitable for providing an enhanced form closed coupling can be used. Moreover, the person skilled in the art will appreciate that the above in analogously holds for any one the third, the fourth, the fifth, the sixth, the seventh and the eighth surface structures mentioned in the appended claims.

Figure 7 also shows that the first locking element 10 is provided with first recess 23 in which the first releasing element 13 of the first locking unit 4 of the first locking device 3 is received while the first locking device 3 is in the unlocked state.

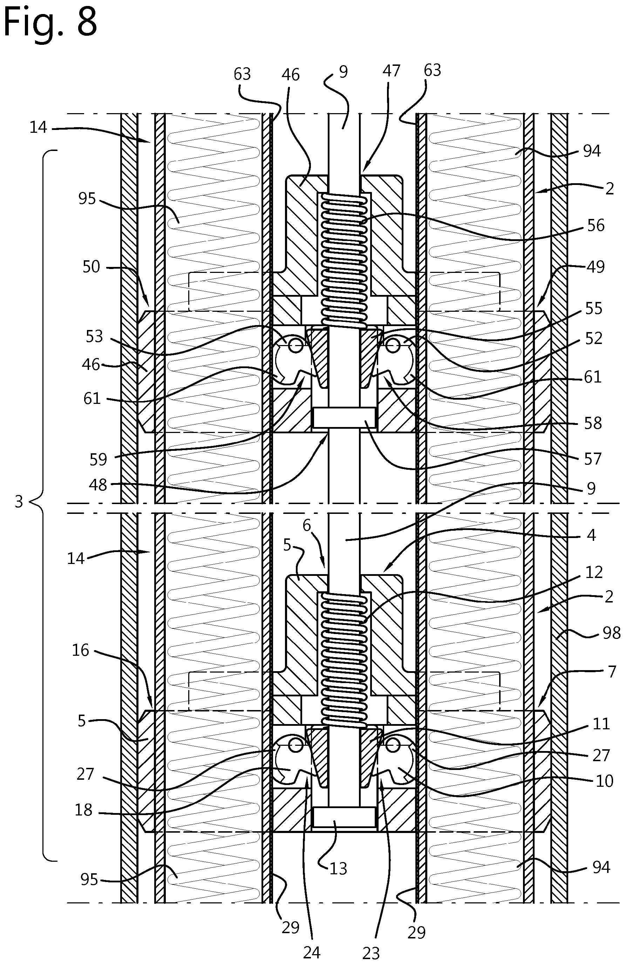

Figure 8 shows a combined perspective and cross-sectional view in an axial direction of the three legs of the stand shown in figure 4. According to the exemplary embodiment of the stand shown in figure 8, the at least first locking device 3 comprises a first locking unit 4 and a third locking unit 45 that are arranged to simultaneously lock and unlock the first leg 2, the second leg 14 and the third leg 15, which actually is not shown in figure 8. The at least first locking device 3 shown in figure 8 is in the locked resting state.

In addition to the features described in relation to figure 2, the first housing 5 of the first locking unit 4 is provided with a second guideway 16 that is arranged to at least partially receive the second leg 14 and guide the second leg and a third guideway 17, see figure 3, that is arranged to at least partially receive the third leg 15 and guide the third leg. The first locking unit 4 comprises a second locking element 18 that is excentrically connected with the first housing 5 and a third locking element 19, see figure 6, that is excentrically connected with the first housing 5. The first locking element 10 is arranged opposite the first leg 2, the second locking element 18 is arranged opposite the second leg 14 and the third locking element 19 is arranged opposite the third leg 15, see figure 6. The first activation element 11 is centrally arranged between the first locking element 10, the second locking element 18 and the third locking element 19 to simultaneously maintain in the resting state of the first locking device 3 under the influence of the first biasing element 12, the first locking element 10 and the first leg 2 in the first locking contact, the second locking element 18 and the second leg 14 in a second locking contact and the third locking element 19 and the third leg 15 in a third locking contact.

Figure 8 also shows that at least the first locking element 10 and the second locking element 18 are provided with respectively a first recess 23 and a second recess 24 in which the first releasing element 13 in the unlocked state of the first locking device 3 is received.

Figure 8 furthermore shows that the third locking unit 45 of the first locking device 3 is arranged opposite the first locking unit 4. The third locking unit 45 comprises a third housing 46 that is provided with a fourth opening 47 and a fifth opening 48 that are arranged opposite to each other and opposite the first opening 6 of the first housing 5. The third housing 46 is further provided with a sixth guideway 49 that is arranged to at least partially receive the first leg 2 and guide the first leg, a seventh guideway 50 that is arranged to at least partially receive the second leg 14 and guide the second leg and a not shown eighth guideway that is arranged to at least partially receive the third leg and guide the third leg.

The third locking unit 45 further comprises a sixth locking element 52 that is excentrically connected with the third housing 46, a seventh locking element 53 that is excentrically connected with the third housing 46 and a not shown eighth locking element that is movably connected with the third housing 46. The sixth locking element 52 is arranged opposite the first leg 2, the seventh locking element 53 is arranged opposite the second leg 14 and the not shown eighth locking element is arranged opposite the third leg.

The third locking unit 45 further comprises a third activation element 55 and a third biasing element 56. The third activation element 55 is centrally arranged between the sixth locking element 52, the seventh locking element 53 and the not shown eighth locking element to simultaneously maintain in the resting state of the at least first locking device 3 under the influence of the third biasing element 56 the sixth locking element 52 and the first leg 2 in a sixth locking contact, the seventh locking element 53 and the second leg 14 in a seventh locking contact and the not shown eighth locking element and the third leg in an eighth locking contact. The first elongated operating element 9 extends in the axial direction of the first leg 2, the second leg 14 and the third leg 15 through the fourth opening 47 into the third housing 46, across the third housing 46, through the fifth opening 48 out of the third housing 46, between the third housing 46 and the first housing 5 and through the first opening 6 at least partially into the first housing 5. The stand 1 according to this embodiment has an improved stability and robustness as each one of the three legs is in fact guided by respective guideways of the first housing 5 of the first locking unit 4 and guideways of the third housing 46 of the third locking unit 45. Furthermore, the stand can be loaded more heavily as in the resting state of the locking device each one of the three legs is in two locking contacts, i.e. the first leg 2 is in the first locking contact with the first locking element 10 of the first locking unit 4 and in the sixth locking contact with the sixth locking element 52 of the third locking unit 45, the second leg 14 is in the second locking contact with the second locking element 18 of the first locking unit 4 and in the seventh locking contact with the seventh locking element 53 of the third locking unit 45 and the third leg 15 is in the third locking contact with the third locking element 19 of the first locking unit 4 and in the eighth locking contact with the eighth locking element of the third locking unit 45.

The person skilled in the art will appreciate that the three legs of the stand 1 shown in figures 4 and 8 in the unlocked state of the first locking device 3 are movable simultaneously and independently with respect to each other and with respect to the first housing 5 and the third housing 45. In this way, it is possible that each one of the three legs assumes a different position with respect to the first housing 5 and the third housing 45 when adjusting the height of the stand 1. Hence the stand 1 according to this embodiment allows a user to adjust the height of the stand 1 and to position the stand 1 stably even on an uneven supporting surface at the same time. This is very convenient and saves a lot of time especially when multiple stands have to be set up. When each one of the first leg 2, the second leg 14 and the third leg 15 has assumed respectively an appropriate first position, second position and third position relative to the first housing 5 and the third housing 45, the user can transfer the first locking device 3 from the unlocked state to the locked resting state in which the first position of the first leg 2, the second position of the second leg 14 and the third position of the third leg 15 with respect to the first housing 5 and to the third housing 45 is simultaneously fixed.

Figure 8 furthermore shows that the sixth locking element 52 is provided with a sixth recess 58 and the seventh locking element 53 is provided with a seventh recess 59 in which, in the unlocked state of the first locking device 3, the third releasing element 57 is received. Figure 8 shows that the first 13 and third 57 releasing elements are rings that are connected with the first elongated operating element 9.

In the exemplary embodiment of figure 8, at least the first locking element 10 is provided with a first friction enhancing material 27 at least at the location of the first locking contact in the resting state of the first locking device 3 and the second locking element 18 is provided with the first friction enhancing material 27 at least at the location of the second locking contact in the resting state of the first locking device 3. Furthermore, at least the sixth locking element 52 is provided with a fifth friction enhancing material 61 at least at the location of the sixth locking contact in the resting state of the first locking device 3 and the seventh locking element 53 is provided with the fifth friction enhancing material 61 at least at the location of the seventh locking contact in the resting state of the first locking device 3. In this way, at least the first, the second, the sixth and the seventh locking contacts are enhanced friction couplings. The person skilled in the art will appreciate that also the third locking element 19 of the first coupling unit 4 and the eighth locking element of the third locking unit can be provided with respectively the first friction enhancing material 27 and the fifth friction enhancing material 61.

Moreover, as shown in figure 8, the first leg 2 and the second leg 14 are provided with elongated axially extending strip of respectively a first friction enhancing material 29 and a sixth friction enhancing material 63. In this way, at least the first, the second, the sixth and the seventh locking contacts can be even further enhanced. The person skilled in the art will appreciate that to this end it is beneficial if the first friction enhancing material 27 and the second friction enhancing material 29 are arranged to work together. The same holds for the fifth friction enhancing material 61 and the sixth friction enhancing material 63. The skilled person will also appreciate that at least one of the first, the second, the fifth and the sixth friction enhancing materials comprises a rubber, for example EPDM 70 shore. Moreover, the person skilled in the art will appreciate that any one of the third, the fourth, the seventh and the eighth friction enhancing materials mentioned in the appended claims can also comprise a rubber, for example EPDM 70 shore.

Figure 8 furthermore shows that the first activation element 11 and the third activation element 55 are arranged around the first elongated operating element 9. The same holds for the first biasing element 12 and the third biasing element 56, which in the embodiment shown in figure 8 are compression springs.

Figure 8 also shows that the first activation element 11 and the third activation element 55 are conically shaped. By using a conically shaped activation element it is possible to accommodate play that is caused by fabrication tolerances of at least one of the locking elements and the legs of the stand. The person skilled in the art will appreciate that the conically shaped first activation element 11 in the locked resting state of the locking device 3 under the influence of the first biasing element 12 will always be forced into contact with the first locking element 10, the second locking element 18 and the not shown third locking element 19 of the first locking unit 4 and hence will maintain the first, the second and the third locking contacts between the first, the second and the third locking elements of the first locking unit 4 and respectively the first leg 2, the second leg 14 and the third leg 15 of the stand 1. Analogously, the conically shaped third activation element 55 in the locked resting state of the locking device 3 under the influence of the third biasing element 56 will always be forced into contact with the sixth locking element 52, the seventh locking element 53 and the eighth locking element of the third locking unit 45 and hence will maintain the sixth, the seventh and the eighth locking contacts between the sixth, the seventh and the eighth locking elements of the third locking unit 45 and respectively the first leg 2, the second leg 14 and the third leg 15 of the stand 1.

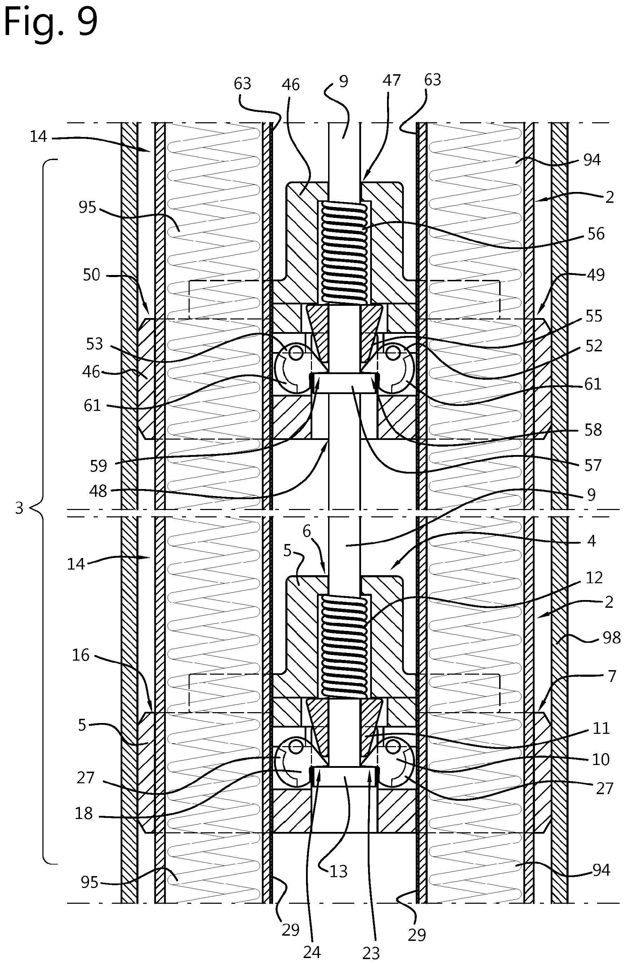

Figure 9 shows a combined perspective and cross-sectional view of the exemplary embodiment of the part of the stand 1 shown in figure 8 but now while the first locking device 3 is in an unlocked state. In the unlocked state of the first locking device 3 of the stand 1 according to the embodiment shown in figure 9, the at least first elongated operating element 9 in fact simultaneously prevents the first locking contact, the second locking contact, the third locking contact, the sixth locking contact, the seventh locking contact and the eighth locking contact. In addition, in the unlocked state of the first locking device 3 of the stand 1 according to this embodiment the first, second and third legs are movable simultaneously and independently with respect to each other and with respect to the first housing 5 and the third housing 46. In this way it is possible that each one of the three legs assumes different positions with respect to the first housing 5 and the third housing 46 when adjusting the height of the stand 1. Hence the stand 1 according to this embodiment allows a user to adjust the height of the stand and to position the stand stably even on an uneven supporting surface at the same time. When each one of the first leg 2, the second leg 14 and the third leg 15, see figure 3, has assumed appropriate positions relative to the first housing 5 and the third housing 46, the user can transfer the locking device 3 from the unlocked state to the locked resting state in which the assumed positions of each one of the three legs with respect to the first housing 5 and the third housing 46 are simultaneously fixed.

Figure 10 shows a perspective view of an exemplary embodiment of a table 99 according to the invention comprising a table leaf 100 that is connected with a height adjustable stand 1 according to the invention having a first leg 2. The stand 1 is provided with a footplate 101 that is arranged to position the table on a supporting surface. The stand 1 further comprises a first elongated tubular element 98 that is arranged coaxially with the first leg 2 and the first elongated operating element 9 of the first central operating device 8 to at least partially envelop the first leg 2 and the first elongated operating element 9. The first elongated tubular element 98 is arranged in a first tenacious contact with at least the first housing 5. By at least partially enveloping the first leg 2 and the first elongated operating element 9 by the first elongated tubular element 98, the first leg 2 and the first elongated operating element 9, which are moving parts of the stand 1, can at least partially be protected from the outside environment in which the stand 1 is placed. As the first leg 2 and the first elongated operating element 9 can at least partially be protected from dirt and damage, at least the reliability of the stand 1 can be improved. Furthermore, the first elongated tubular element 98 allows to hide the first leg 2 and the first elongated operating element 9, i.e. the internal construction of the stand 1, and to provide the stand 1 with any desired appearance, e.g. colour, design pattern, etcetera.

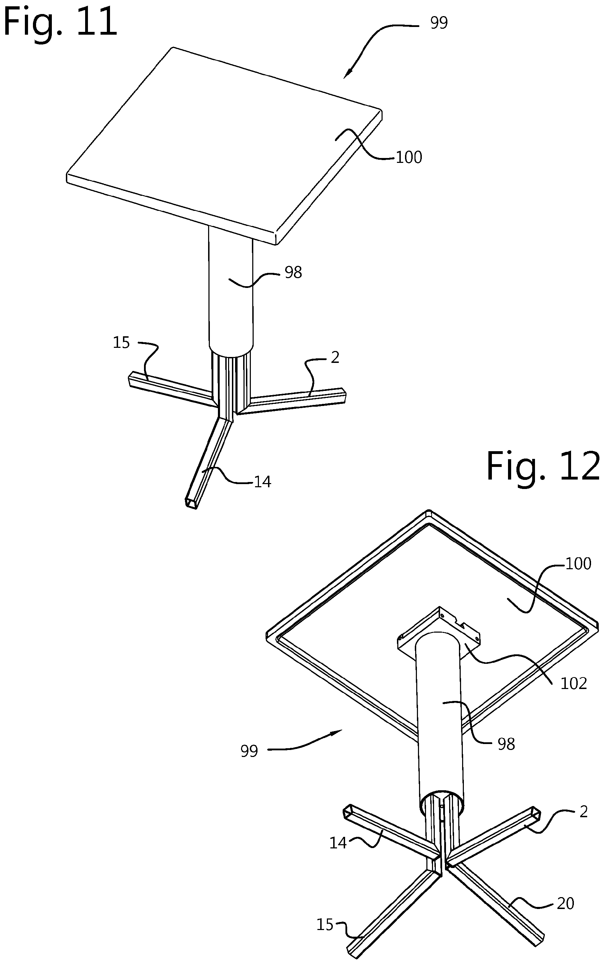

Figure 11 shows a perspective view of another exemplary embodiment of the table 99 according to the invention comprising a table leaf 100 that is connected with a height adjustable stand 1 according to the invention having a first leg 2, a second leg 14 and a third leg 15. Figure 12 shows a perspective view of yet another exemplary embodiment of the table 99 according to the invention comprising a table leaf 100 and a height adjustable stand 1 according to the invention having a first leg 2, a second leg 14, a third leg 15 and a fourth leg 20. The person skilled in the art will appreciate that for the tables 99 according to the embodiments shown in figures 11 and 12 the height can conveniently be adjusted as explained above and that the respectively three and four legs of these tables can be simultaneously and individually be moved such that these tables can be positioned stably even on uneven supporting surfaces.

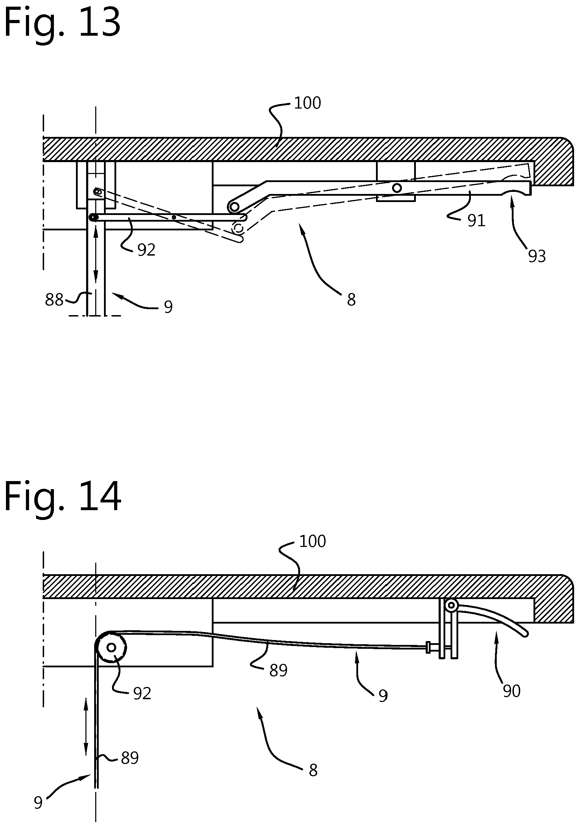

Figure 13 shows a side view of a part of the table leaf 100 of any one of the tables 99 shown in figures 10-12 and an exemplary embodiment of the at least first central operating device 8 of the stand 1 according to the invention. In the embodiment shown in figure 13, the first elongated operating element 9 comprises a rod 88. Figure 13 also shows that the first central operating device 8 comprises a second elongated operating element 91 and a first transmission element 92 that is arranged to connect the first elongated operating element 9 and the second elongated operating element 91 with each other and to transfer a first displacement of the second elongated operating element 91 to the first elongated operating element 9 in order to transfer the at least first locking device 3 from the resting state to the unlocked state. Figure 13 shows that the second elongated operating element 91 and the first transmission element 92 are hingeably connected with the table leaf 100. The second elongated operating element 91 is provided with a second handle 93 that is operable by a user to move the second elongated operating element 91 in the indicated direction by which the first elongated operating element 9 is moved towards the table leaf 100. As a result, the first locking device 3 is transferred from the locked resting state to the unlocked state in which the height of the stand 1 and consequently of the table 99 can be adjusted.

Figure 14 shows a side view of a part of the table leaf 100 of any one of the tables 99 shown in figures 10-12 and another exemplary embodiment of the at least first central operating device 8 of the stand 1 according to the invention. In the embodiment shown in figure 14, the first elongated operating element 9 comprises a cable 89. Figure 14 also shows that the first elongated operating element 9 is provided with a first handle 90. According to the exemplary embodiment shown in figure 14, the first transmission element 92 of the first central operating device 8 comprises a pulley that is arranged to transfer a first displacement of the first handle towards the table leaf 100 into a movement of the first elongated operating element 9 in order to transfer the at least first locking device 3 from the locked resting state to the unlocked state in which the height of the stand 1 and consequently of the table 99 can be adjusted.

The skilled person will appreciate that the first housing 5, the second housing 32, the third housing 46, the fourth housing 66, the first locking element 10, the second locking element 18, the third locking element 19, the fourth locking element 22, the fifth locking element 36, the sixth locking element 52, the seventh locking element 53, the eighth locking element, the ninth locking element 73, the tenth locking element 74, the eleventh locking element 75 and the twelfth locking element can be made from any suitable preferably lightweight material. In this respect aluminum and plastic are suitable choices. A suitable plastic is for example PA6 GF30. Although from a commercial point of view lightweight and cheap material are preferred, it will be clear to the person skilled in the art that other materials such as steel, wood, compound materials whether or not fiber-reinforced may be used.

In the exemplary embodiment in which the first elongated operating element 9 is implemented as a rod 88, preferably a stainless steel rod is used. The diameter of the rod can be any suitable diameter, for example 8mm. Furthermore, the first leg 2, the second leg 14, the third leg 15, the fourth leg 20 and the first elongated tubular element 98 can be made from any suitable material, for example aluminum, fiber-reinforced plastic, fiber-reinforced compound material etcetera. The table leaf 100 can for example be made of wood, glass whether or not reinforced in some way, aluminum, plastic whether or not fiber-reinforced, compound material wheter or not fiber-reinforced.

In the foregoing description of the drawings, the invention has been described with reference to specific embodiments thereof. It will, however, be evident that various modifications/additions and/or changes/substitutions may be made thereto without departing from the scope of the invention as summarized in the attached claims.

In particular, combinations of specific features of various aspects of the invention may be made. An aspect of the invention may be further advantageously enhanced by adding a feature that was described in relation to another aspect of the invention.

It is to be understood that the invention is limited by the annexed claims and its technical equivalents only. In this document and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

## Claims

1. A height adjustable stand (1) for supporting an object, the stand (1) comprising
- at least a first leg (2) and at least a first locking device (3) that comprises at least a first locking unit (4), the at least first locking unit (4) comprising at least a first housing (5) that is provided with at least a first opening (6) and at least a first guideway (7) that is arranged to at least partially receive the at least first leg (2) and guide the at least first leg (2),
- the stand (1) further comprising at least a first central operating device (8) that comprises at least a first elongated operating element (9) that is movable in an axial direction of the at least first leg (2) through the at least first opening (6) of the at least first housing (5) and is arranged to allow a user to transfer the at least first locking device (3) from a locked resting state to an unlocked state,
- the at least first locking unit (4) further comprising at least a first locking element (10), at least a first activation element (11) and at least a first biasing element (12), wherein the at least first locking element (10) is movably connected with the at least first housing (5) and the at least first activation element (11) and the at least first biasing element (12) are arranged between the at least first housing (5) and the at least first locking element (10) to maintain in the resting state of the at least first locking device (3) the at least first locking element (10) and the at least first leg (2) in a first locking contact to fix a height of the stand (1), wherein the at least first elongated operating element (9) is arranged to prevent in the unlocked state of the at least first locking device (3) the first locking contact between the at least first locking element (10) and the at least first leg (2) to adjust the height of the stand (1).

2. The stand (1) according to claim 1, wherein the first locking unit (4) further comprises at least a first releasing element (13) that is connectable to or at least adjustably connected with the at least first elongated operating element (9), wherein in the unlocked state of the at least first locking device (3) the at least first releasing element (13) under the influence of the at least first elongated operating element (9) is tenable in abutting contact with the at least first locking element (10) to prevent the first locking contact.

3. The stand (1) according to claim 1 or 2, wherein the stand (1) comprises a second leg (14) and a third leg (15), the at least first housing (5) is provided with a second guideway (16) that is arranged to at least partially receive the second leg (14) and guide the second leg and a third guideway (17) that is arranged to at least partially receive the third leg (15) and guide the third leg, the at least first locking unit (4) comprises a second locking element (18) that is movably connected with the at least first housing (5) and a third locking element (19) that is movably connected with the at least first housing (5), wherein the first locking element (10) is arranged opposite the first leg (2), the second locking element (18) is arranged opposite the second leg (14) and the third locking element (19) is arranged opposite the third leg (15), wherein the at least first activation element (11) is centrally arranged between the first locking element (10), the second locking element (18) and the third locking element (19) to simultaneously maintain in the resting state of the at least first locking device (3) under the influence of the at least first biasing element (12) the first locking element (10) and the first leg (2) in the first locking contact, the second locking element (18) and the second leg (14) in a second locking contact and the third locking element (19) and the third leg (15) in a third locking contact, wherein the at least first elongated operating element (9) is arranged to simultaneously prevent in the unlocked state of the at least first locking device (3) the first locking contact, the second locking contact and the third locking contact.

4. The stand (1) according to claim 3 in its dependence on claim 2, wherein in the unlocked state of the at least first locking device (3) the at least first releasing element (13) under the influence of the at least first elongated operating element (9) is simultaneously tenable in abutting contact with the first locking element (10), the second locking element (18) and the third locking element (19) to simultaneously prevent the first locking contact, the second locking contact and the third locking contact.

5. The stand (1) according to claim 3, wherein the stand (1) comprises a fourth leg (20), the at least first housing (5) is provided with a fourth guideway (21) that is arranged to at least partially receive the fourth leg (20) and guide the fourth leg, the at least first locking unit (4) comprising a fourth locking element (22) that is movably connected with the at least first housing (5), wherein the fourth locking element (22) is arranged opposite the fourth leg (20), wherein the at least first activation element (11) is centrally arranged between the first locking element (10), the second locking element (18), the third locking element (19) and the fourth locking element (22) to simultaneously maintain in the resting state of the at least first locking device (3) under the influence of the at least first biasing element (12) the first locking element (10) and the first leg (2) in the first locking contact, the second locking element (18) and the second leg (14) in the second locking contact, the third locking element (19) and the third leg (15) in the third locking contact and the fourth locking element (22) and the fourth leg (20) in a fourth locking contact, wherein the at least first elongated operating element (9) is arranged to simultaneously prevent in the unlocked state of the at least first locking device (3) the first locking contact, the second locking contact, the third locking contact and the fourth locking contact.

6. The stand (1) according to claim 5 in its dependence on claim 3 in its dependence on claim 2, wherein in the unlocked state of the at least first locking device (3) the at least first releasing element (13) under the influence of the at least first elongated operating element (9) is simultaneously tenable in abutting contact with the first locking element (10), the second locking element (18), the third locking element (19) and the fourth locking element (22) to simultaneously prevent the first locking contact, the second locking contact, the third locking contact and the fourth locking contact.

7. The stand (1) according to claim 5 or 6, wherein at least one of the first locking element (10), the second locking element (18), the third locking element (19) and the fourth locking element (22) is excentrically connected with the at least first housing (5).

8. The stand (1) according to any one of the claims 5-7, wherein at least one of the first locking element (10), the second locking element (18), the third locking element (19) and the fourth locking element (22) is provided with respectively a first recess (23), a second recess (24), a third recess (25) and a fourth recess (26) in which in the unlocked state of the at least first locking device (3) the at least first releasing element (13) is receivable.

9. The stand (1) according to any one of the claims 5-8, wherein at least one of the first locking element (10), the second locking element (18), the third locking element (19) and the fourth locking element (22) is provided with at least one of a first friction enhancing material (27) and a first surface structure (28) at least at a location of respectively the first locking contact, the second locking contact, the third locking contact and the fourth locking contact in the resting state of the at least first locking device (3).

10. The stand (1) according to any one of the claims 5-9, wherein at least one of the first leg (2), the second leg (14), the third leg (15) and the fourth leg (20) is provided with at least one of a second friction enhancing material (29) and a second surface structure (30) at least at the location of respectively the first locking contact, the second locking contact, the third locking contact and the fourth locking contact in the resting state of the at least first locking device (3).

11. The stand (1) according to claim 10, wherein at least one of the first friction enhancing material (27) and the first surface structure (28) is arranged to work together with at least one of the second friction enhancing material (29) and the second surface structure (30).

12. The stand (1) according to claim 10 or 11, wherein at least one of the first friction enhancing material (27) and the second friction enhancing material (29) comprises a rubber.

13. The stand (1) according to claim 10 or 11, wherein at least one of the first surface structure (28) and the second surface structure (30) comprises a serrated portion.

14. The stand (1) according to any one of the preceding claims, wherein the at least first activation element (11) is conically shaped.

15. A table (99) comprising a table leaf (100) and a height adjustable stand (1) according to any one of the preceding claims, wherein the table leaf (100) and the stand (1) are at least releasably connected with each other.
